# EUROPEAN PATENT APPLICATION

(11) **EP 4 775 487 A1**
(43) Date of publication of application: **15.07.2026**
(21) Application number: 24863301.8
(22) Date of filing: 15.03.2024
(51) Int. Cl.: B63H 21/38, B63B 11/04, B63B 25/16, B63J 2/12, B63H 21/16, B63J 3/04, B63J 4/00, F02C 7/22, F02C 3/22, F02C 6/20

(54) **FUEL SUPPLY SYSTEM AND METHOD FOR AMMONIA GAS TURBINE OF SHIP**

(30) Priority: 06.09.2023 KR 20230118575; 02.11.2023 KR 20230149987
(71) Applicant: Hanwha Ocean Co., Ltd., Geoje-si, Gyeongsangnam-do 53302 (KR)
(72) Inventor: LEE, Geun Seob, Seoul 04307 (KR); KANG, Da Yeon, Seoul 03113 (KR); LEE, Sang Min, Geoje-si, Gyeongsangnam-do 53300 (KR); HWANG, Jong Kyu, Seongnam-si, Gyeonggi-do 13532 (KR); GANG, Geum Jun, Seoul 08017 (KR)
(74) Representative: Cabinet Beau de Loménie
(86) International application number: PCT/KR2024/095558
(87) International publication number: WO 2025/053722

(57) **Abstract**

The present invention relates to a ship provided with a gas turbine using ammonia as fuel. The ammonia gas turbine fuel supply system according to the present invention comprises: a gas turbine generating power using gaseous ammonia as fuel; an ammonia fuel supply unit for supplying gaseous ammonia fuel to the gas turbine; and an ammonia catching unit for treating ammonia in a purge gas generated while purging at least one of the gas turbine and the ammonia fuel supply unit, wherein the gaseous ammonia supplied to the gas turbine from the ammonia fuel supply unit is entirely consumed by the gas turbine without being returned to the ammonia fuel supply unit.

## Description

### [Technical Field]

The present invention relates to a ship provided with a gas turbine using ammonia as fuel.

### [Background Art]

The International Maritime Organization (IMO), a specialized United Nations organization established to internationally harmonize ship routes, traffic rules, port facilities, and the like, has also set targets for greenhouse gas emissions to a 50% reduction by 2050 compared to 2008 levels, and 100% reduction (GHG Zero Emission) by 2100. As a result, regulations by individual nations and regions are expected to be strengthened.

According to the Energy Efficiency Design Index (EEDI), a mandatory carbon dioxide reduction regulation applied to newbuilding ships by the IMO, although the initial EEDI announcement stipulated that EEDI Phase 1 for reduction of carbon dioxide emissions by 10% in 2015 based on carbon dioxide emissions from 2013 to 2015 would be applied, and scheduled the application of Phase 3 in 2025 by strengthening and applying one phase every five years, LPG carriers will be required to apply EEDI Phase 3 early, starting in 2022, just two years after the application of EEDI Phase 2. As such, regulations on carbon dioxide emissions are rapidly tightening, and if Phase 4 (reduction of carbon dioxide emissions by 40%) or higher standards are applied in the future for LPG carriers of 15,000 DWT or more, satisfying regulations on carbon dioxide emissions with LPGCs that currently use LPG as fuel will be difficult.

Accordingly, various studies are being conducted on eco-friendly ship fuels that can reduce carbon dioxide emissions, and recently, technologies have been developed for ships that can use ammonia as fuel in addition to LNG or LPG.

Ammonia (NH₃) is a substance with three hydrogen atoms bonded to one nitrogen atom, in which strong hydrogen bonds are formed between molecules, making it easy to liquefy, and has a boiling point of about -33.34°C and a melting point of about -77.73°C at normal pressure.

Ammonia is easier to store than LNG and does not produce any carbon dioxide, thereby attracting attention as an eco-friendly ship fuel that can respond to the trend of strengthening international greenhouse gas emission standards.

### [Disclosure]

### [Technical Problem]

Therefore, the present invention is aimed at providing an ammonia gas turbine fuel supply system that can comply with the future strengthening of greenhouse gas emission regulations for ships by using ammonia, a chemical substance that has been used on land for more than 100 years and whose supply chain, including production, storage, transportation, and supply, has been fully verified, as a fuel for ships.

In particular, it is an aspect of the present invention to provide a system and method for supplying ammonia fuel to gas turbines of a ship that can store ammonia in a liquid phase to supply gaseous ammonia to engines by vaporizing the liquid-phase ammonia and can improve energy efficiency by recovering waste heat from exhaust gas to vaporize the liquid-phase ammonia.

### [Technical Solution]

In accordance with one aspect of the present invention, there is provided an ammonia gas turbine fuel supply system including: a gas turbine generating power using gaseous ammonia as fuel; an ammonia fuel supply unit for supplying gaseous ammonia fuel to the gas turbine; and an ammonia catching unit for treating ammonia in a purge gas generated while purging at least one of the gas turbine and the ammonia fuel supply unit, wherein the gaseous ammonia supplied to the gas turbine from the ammonia fuel supply unit is entirely consumed by the gas turbine without being returned to the ammonia fuel supply unit.

Preferably, the ammonia fuel supply unit includes: an ammonia storage tank storing ammonia in a liquid phase; an ammonia boosting pump pressurizing the liquid-phase ammonia to a pressure required for the gas turbine; and an ammonia vaporizer vaporizing the ammonia pressurized by the ammonia boosting pump to generate gaseous ammonia, wherein a temperature of the gaseous ammonia produced in the ammonia vaporizer is higher than a dew point thereof.

Preferably, the ammonia fuel supply unit further includes: a buffer tank temporarily storing ammonia in a liquid phase by a preset liquid level before supplying the ammonia to the ammonia boosting pump; and a liquid level meter measuring the liquid level in the buffer tank and controlling the ammonia boosting pump to start when the liquid level is higher than or equal to a preset value.

Preferably, the ammonia fuel supply unit further includes an ammonia supply pump provided to the ammonia storage tank and delivering the liquid-phase ammonia stored in the ammonia storage tank to the buffer tank, the ammonia supply pump being controlled to operate when the liquid level in the buffer tank as measured by the liquid level meter is less than a preset value and to stop when the liquid level in the buffer tank is higher than or equal to the preset value.

Preferably, the ammonia gas turbine fuel supply system further includes: a waste heat recovery unit for recovering waste heat of exhaust gas from the gas turbine to generate supercritical carbon dioxide and expanding the supercritical carbon dioxide to generate power, wherein the ammonia vaporizer vaporizes the liquid-phase ammonia with thermal energy of the supercritical carbon dioxide received from the waste heat recovery unit.

Preferably, the ammonia gas turbine fuel supply system further includes: a heat source supply unit for supplying hot water generated through heat exchange between steam and water to the ammonia vaporizer as a heat source for vaporizing the liquid-phase ammonia.

Preferably, the ammonia catching unit includes a separator separating the purge gas into gas and liquid; and an absorber separating ammonia in a gaseous component separated in the separator by dissolving the ammonia in water, and to discharge the remaining purge gas, from which the ammonia has been separated, into the atmosphere.

Preferably, the ammonia catching unit further includes: a drain tank storing ammonia-containing water produced by the absorber; a water-circulation pump recirculating the water stored in the drain tank to the absorber; and a make-up water supply unit supplying make-up water when an acidity of the drain tank falls less than a preset value.

Preferably, the ammonia gas turbine fuel supply system further includes an ammonia condensing unit for condensing ammonia boil-off gas generated in the ammonia fuel supply unit to generate reliquefied ammonia boil-off gas.

In accordance with another aspect of the present invention, there is provided a ship including the ammonia gas turbine fuel supply system.

Preferably, the gas turbine is a dual-fuel gas turbine optionally using gaseous ammonia and other gaseous fuels as fuel, and the ship further includes a generator engine generating power using the gaseous fuels, wherein at least one of the gas turbine and the generator engine uses the power for propulsion.

Preferably, the ship is a liquefied gas carrier and further includes: a liquefied gas storage tank storing a cargo of liquefied gas; and a gaseous fuel supply system for supplying boil-off gas of liquefied gas generated through spontaneous vaporization of the liquefied gas in the liquefied gas storage tank as fuel for the gas turbine and the generator engine.

Preferably, the ship further includes a reliquefaction system for reliquefying the boil-off gas of the liquefied gas to return the boil-off gas to the liquefied gas storage tank when an amount of the boil-off gas is greater than an amount of the boil-off gas to be consumed as fuel for the gas turbine and the generator engine.

Preferably, the gaseous fuel supply system further includes: a fuel boosting pump receiving liquefied gas from the liquefied gas storage tank to pressurize the liquefied gas to a pressure required for the gas turbine and the generator engine when an amount of the boil-off gas of the liquefied gas is less than an amount of boil-off gas required as fuel for the gas turbine and the generator engine; and a fuel vaporizer vaporizing the liquefied gas pressurized by the fuel boosting pump to generate gaseous fuel.

Preferably, the gas turbine operates in idling mode by receiving the boil-off gas of the liquefied gas when there is no power demand.

Preferably, the ship is provided with no gas combustion unit (GCU).

In accordance with a further aspect of the present invention, there is provided an ammonia gas turbine fuel supply method, including: generating gaseous ammonia by vaporizing and heating ammonia stored in a liquid phase; generating power by combusting the gaseous ammonia to drive a gas turbine, and using the generated power for propulsion; and absorbing ammonia in a purge gas to reduce a concentration of ammonia in the purge gas before the purge gas is vented to the atmosphere, the purge gas being generated while purging the gas turbine and at least one of piping and devices used to generate the gaseous ammonia, wherein the gaseous ammonia supplied to the gas turbine is entirely combusted in the gas turbine without being returned and discharged from the gas turbine.

Preferably, the step of generating gaseous ammonia includes pressurizing the liquid-phase ammonia to a pressure required for the gas turbine; and vaporizing the pressurized liquid-phase ammonia to a temperature higher than a dew point of the ammonia.

Preferably, the step of generating gaseous ammonia includes storing the liquid-phase ammonia in a buffer tank prior to the pressurizing step; and measuring a liquid level in the buffer tank, followed by supplying the liquid-phase ammonia stored in the buffer tank to the pressurizing step to maintain the liquid level in the buffer tank, when the liquid level is higher than or equal to a preset value.

Preferably, the step of generating gaseous ammonia includes: storing the liquid-phase ammonia in the buffer tank prior to the pressurizing step; and measuring a liquid level in the buffer tank, followed by delivery of the liquid-phase ammonia to the buffer tank from an ammonia storage tank in which the ammonia is stored in the liquid phase, when the liquid level is less than a preset value, and stopping delivery of the liquid-phase ammonia to the buffer tank to maintain the liquid level in the buffer tank, when the liquid level is higher than or equal to the preset value.

Preferably, the ammonia gas turbine fuel supply method further comprising recovering ammonia boil-off gas generated by spontaneous vaporization of ammonia stored in the liquid phase by condensing the ammonia boil-off gas without supplying the ammonia boil-off gas to the gas turbine.

Preferably, the ammonia gas turbine fuel supply method further includes compressing boil-off gas generated by spontaneous vaporization of liquefied gas fuels other than ammonia to a pressure required for the gas turbine; and supplying the compressed boil-off gas as fuel to the gas turbine.

### [Advantageous Effects]

A system and method for supplying ammonia fuel to gas turbines of a ship according to the present invention can store ammonia, an environmentally friendly fuel, in a liquid phase and supply the gaseous ammonia to an engine as fuel. In addition, when applied to a ship, the use of ammonia as fuel can reduce greenhouse gas emissions during operation and can meet regulatory standards set by international agreements.

In addition, the system and method for supplying ammonia fuel to gas turbines according to the present invention generates power using a gas turbine including a combustor that combusts ammonia, thereby preventing occurrence of methane slip and emission of methane to the atmosphere while enabling carbon-free power generation not using carbon-containing fossil fuels.

Furthermore, the system and method for supplying ammonia fuel to gas turbines according to the present invention can improve overall energy efficiency by recovering waste heat from exhaust gas of the gas turbine to vaporize liquid-phase ammonia and other fuels in a liquid phase.

Furthermore, in the system and method for supplying ammonia fuel to gas turbines according to the present invention, the gas turbine has a gas valve unit disposed in an enclosure, thereby reducing a risk due to ammonia leakage.

Furthermore, the system and method for supplying ammonia fuel to gas turbines according to the present invention can generate power using the gas turbines, thereby satisfying regulations on nitrogen oxide emissions while using ammonia as fuel, and does not require installation of a nitrogen oxide reduction device, such as a selective catalytic reduction device, thereby increasing space utilization while reducing operating costs.

Furthermore, the system and method for supplying ammonia fuel to gas turbines according to the present invention are compatible with liquefied gases of similar properties, such as methanol or LPG, to ammonia, and can be readily applied to engines beyond gas turbines.

### [Description of Drawings]

FIG. 1 is a schematic diagram of an ammonia gas turbine fuel supply system according to embodiments of the present invention.
FIG. 2 is a schematic diagram of an ammonia gas turbine fuel supply system according to one embodiment of the present invention, which includes an ammonia fuel supply unit, an ammonia condensing unit, and an ammonia catching unit.
FIG. 3 is a view illustrating the configuration of a gas turbine according to embodiments of the present invention.
FIG. 4 is a block diagram of an ammonia fuel supply unit according to embodiments of the present invention.
FIG. 5 is a schematic diagram of an ammonia condensing unit according to embodiments of the present invention.
FIG. 6 is a diagram illustrating a leakage prevention method of a cold heat recovery unit according to one embodiment of the present invention.
FIG. 7 is a block diagram of an ammonia catching unit according to embodiments of the present invention.
FIG. 8 is a block diagram of a modification of the ammonia catching unit according to embodiments of the present invention.
FIG. 9 is a diagram illustrating one embodiment of a method of arranging a clean drain tank according to one embodiment of the present invention.
FIG. 10 is a block diagram of an ammonia catching unit according to another embodiment of the present invention.
FIG. 11 is a block diagram of an ammonia catching unit according to another embodiment of the present invention.
FIG. 12 is a schematic diagram of a waste heat recovery unit according to one embodiment of the present invention.
FIG. 13 is a block diagram of a modification of the waste heat recovery unit according to the embodiment of the present invention.
FIG. 14 is a block diagram of an embodiment in which heat is supplied to an ammonia vaporizer according to the present invention.
FIG. 15 is a diagram illustrating a method of supplying thermal energy of steam as a heat source to an ammonia vaporizer using a heat source supply unit according to one embodiment of the present invention.
FIG. 16 is a diagram illustrating a method of supplying thermal energy of a waste heat recovery unit as a heat source to the ammonia vaporizer using the heat source supply unit according to the embodiment of the present invention.
FIG. 17 is a schematic diagram of a gaseous fuel supply system and a reliquefaction system according to one embodiment of the present invention.
FIG. 18 is a diagram illustrating one embodiment in which heat is supplied to a fuel vaporizer from the waste heat recovery unit according to the present invention.
FIG. 19 is a diagram illustrating another embodiment in which heat is supplied to the fuel vaporizer from the waste heat recovery unit according to the present invention.
FIG. 20 is a diagram more specifically illustrating a gaseous fuel compressor 720 and a boil-off gas compressor 810 according to one embodiment of the present invention.
FIG. 21 is a diagram illustrating a method of purging a gas turbine according to one embodiment of the present invention.
FIG. 22 is a diagram illustrating a method of purging a gas turbine according to one embodiment of the present invention.
FIG. 23 is a top view of one embodiment of a ship arrangement according to the present invention.
FIG. 24 is a plan view of one embodiment of the ship arrangement shown in FIG. 23.
FIG. 25 is a top view of another embodiment of the ship arrangement according to the present invention.
FIG. 26 is a plan view of one embodiment of the ship arrangement shown in FIG. 25.

### [Best Mode]

In order to fully appreciate the operational advantages of the present invention and the objectives achieved by practicing the present invention, reference should be made to the accompanying drawings, which illustrate preferred embodiments of the invention, and description thereof. Even without direct reference to the accompanying drawings, corresponding features are deemed described in the specification, provided that the principle of operation is evident to those skilled in the art based on the drawings.

Hereinafter, exemplary embodiments of the present invention will be described in detail in terms of the features and effects thereof with reference to the accompanying drawings. It should be noted that like components will be denoted by like reference numerals throughout the specification and the accompanying drawings. Furthermore, the following embodiments may be modified in various other forms, and the scope of the invention is not limited to the following embodiments.

A system and method for supplying ammonia fuel to gas turbines according to embodiments of the present invention described herein may be applied to a ship or land vehicle provided with an ammonia storage tank for storing ammonia in a liquid phase and an engine capable of using ammonia as fuel, either alone or in combination with other fuels.

Herein, "engine" may refer not only to an internal combustion engine, such as a two-stroke or four-stroke engine, but also to a device, such as a fuel cell or a turbine-generator, that uses gaseous ammonia, either alone or in combination with other gaseous fuels, to generate power for a ship's propulsion or operation.

In description of the embodiments described below, the engine will be described, for example, as an ammonia gas turbine that generates power by driving the turbine with combustion gas generated by combustion of gaseous ammonia or a mixture of gaseous ammonia and a gaseous fuel.

In addition, a ship may refer to any type of ship including both a self-propelled ship having propulsion capability, such as a container ship or a liquefied gas carrier, and a floating offshore structure, such as a floated production, storage and offloading (FPSO) unit and the like, which does not have propulsion capability and uses electricity generated using ammonia as fuel on board.

Furthermore, the liquefied gas carrier may be a carrier for hydrocarbon-based liquefied gas, such as liquefied natural gas (LNG), liquefied petroleum gas (LPG), methanol (CH₃OH), and the like, or a carrier for non-hydrocarbon-based liquefied gas, such as ammonia (NH₃), hydrogen (H₂), carbon dioxide (CO₂), and the like.

In some embodiments described below, the ship will be described, for example, as an LNG carrier that is provided with a cargo hold for storing LNG to transport LNG.

Furthermore, in some embodiments of the invention, the fuel will be described, for example, as ammonia. However, it should be noted that the present invention may also be applied to fuels, such as methanol (CH₃OH) and liquefied petroleum gas (LPG), which have similar chemical properties to ammonia and can be substituted for ammonia.

In summary, the ship according to the embodiments will be described as an electric propulsion gas turbine LNG carrier provided with a gas turbine using ammonia as fuel, as a carbon-free propulsion system, and the LNG carrier will be described as a large carrier of 174,000 m³.

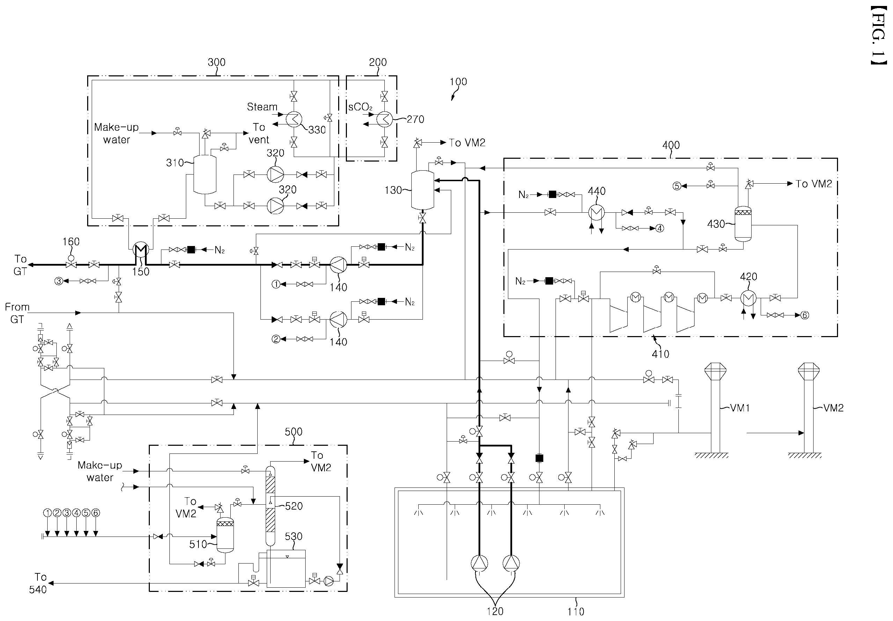

Hereinafter, with reference to FIG. 1 to FIG. 26, a system and method for supplying ammonia fuel to gas turbines of a ship according to embodiments of the invention will be described.

First, referring to FIG. 1, an ammonia gas turbine fuel supply system according to embodiments of the invention includes: an engine using gaseous ammonia as fuel, an ammonia fuel supply unit 100 for supplying ammonia fuel to the engine; a heat source supply unit 300 for supplying a heat source for vaporizing ammonia in a liquid phase to gaseous ammonia to the ammonia fuel supply unit 100; a waste heat recovery unit 200 for recovering waste heat of exhaust gas from the engine and supplying the waste heat to the ammonia fuel supply unit 100 to vaporize the liquid phase ammonia; an ammonia condensing unit 400 for condensing and recovering ammonia boil-off gas generated by spontaneous vaporization of the liquid phase ammonia; and an ammonia catching unit 500 for treating ammonia in a purge gas generated while purging the ammonia gas turbine fuel supply system.

In description of the embodiments described below, the ammonia gas turbine fuel supply system will be described with reference to the structure where the ammonia gas turbine fuel supply system includes the ammonia fuel supply unit 100, the waste heat recovery unit 200, the heat source supply unit 300, the ammonia condensing unit 400, and the ammonia catching unit 500, as shown in FIG. 1.

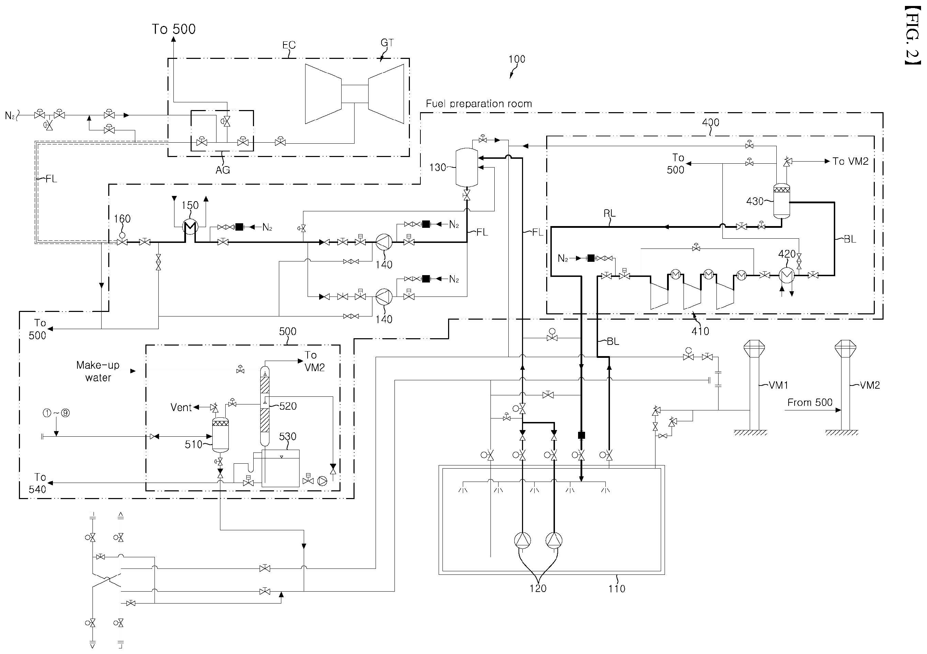

However, it should be understood that the present invention is not limited thereto, and the ammonia gas turbine fuel supply system may include an optional combination of the ammonia fuel supply unit 100, the heat source supply unit 300, the heat source supply unit 300, the ammonia condensing unit 400, and the ammonia catching unit 500, such as a structure including only the ammonia fuel supply unit 100, the ammonia condensing unit 400, and the ammonia catching unit 500, as shown in FIG. 2.

### <Gas turbine (GT)>

An engine according to embodiments of the invention may include a gas turbine (GT) that utilizes combustion gas generated by combusting gaseous ammonia to generate rotational force for power production.

The power generated by the gas turbine (GT) may be used for on-site power demand sites. When the ammonia gas turbine fuel supply system according to the embodiments is applied to a ship, the gas turbine (GT) may be used to generate power for the ship's electric propulsion and for the on-board power demand sites.

The gas turbine (GT) may be a dual-fuel gas turbine, in which exhaust gas generated by combustion of gaseous ammonia or other gaseous fuels, such as natural gas, may be used as a working fluid.

In other words, the gas turbine (GT) utilizes exhaust gas generated by combustion of a gaseous fuel as a working fluid, wherein the gaseous fuel may include at least one of gaseous ammonia, a gas mixture including gaseous ammonia, or a gaseous fuel other than ammonia.

Thus, the gas turbine (GT) may selectively operate in any one mode among a mode using gaseous ammonia as fuel, a mode using a gas mixture including gaseous ammonia as fuel, and a mode using other gaseous fuels as fuel, depending on the situation.

Hereinafter, the gas turbine (GT) will be described, for example, as a dual-fuel gas turbine fueled by gaseous ammonia and natural gas as a supplementary fuel.

When the gas turbine (GT) is a dual-fuel gas turbine, ammonia and natural gas may be used as fuel individually or as a mixture, thereby reducing emissions of air pollutants while providing flexibility in selectively adjusting an operation mode of the gas turbine (GT) for power generation.

The gas turbine (GT) may operate in a mode that initially uses natural gas as fuel from the time of startup, and then switches to a mode that uses ammonia or a gas mixture as fuel when an operating load reaches a minimum load or higher.

In addition, the gas turbine (GT) may generate power from a load higher than or equal to the minimum load and may operate in idling mode under a load less than the minimum load, in which the gas turbine only consumes the fuel to drive the turbine without generating power.

The idling operation of the gas turbine (GT) can serve to pre-start the gas turbine (GT) until the load of the gas turbine (GT) reaches the minimum load or higher, and can also serve to combust the gas to be incinerated on board.

On the other hand, a typical main propulsion engine, which adopts a four-stroke or two-stroke cycle using ammonia and natural gas as fuel, requires pilot oil to combust the fuel. In addition, the main propulsion engine is provided with a selective catalytic reduction (SCR) system to satisfy emission regulations due to a high amount of NOx emissions in exhaust gas after combustion.

However, according to embodiments of the invention, since ammonia, a carbon-free fuel, is supplied in a gas phase to the gas turbine (GT) for power generation of an electric propulsion ship, instead of being supplied to an internal combustion engine, and is combusted in a combustion chamber of the gas turbine (GT), the ammonia gas turbine fuel supply system does not require any pilot oil and generates no air pollutants, such as CO₂, NOₓ, and the like. The ammonia gas turbine fuel supply system also discharges virtually no nitrous oxide, which has the largest greenhouse effect.

Therefore, since NOₓ in the exhaust gas is discharged below a regulated level even upon combustion of ammonia and natural gas, it is possible to meet the emission regulations of the International Maritime Organization (IMO) even without a nitrogen oxide reduction device, such as an SCR system, and a material for catalytic reaction, such as aqueous urea, thereby improving space utilization while reducing operating costs.

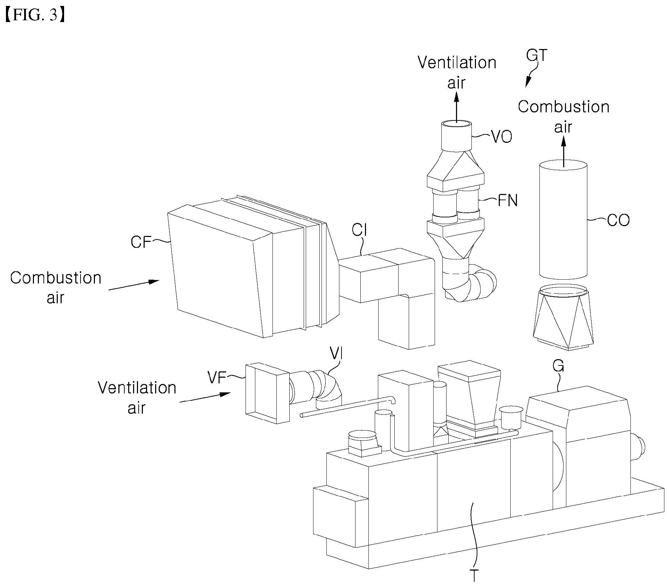

Referring to FIG. 3, the gas turbine (GT) may be provided with a combustion air inlet duct (CI) to suction combustion air for combustion of gaseous ammonia, and a combustion gas outlet duct (CO) to discharge combustion gas generated after combustion.

In addition, an air compressor (not shown) generating compressed air by compressing the combustion air suctioned through the combustion air inlet duct (CI); a burner (not shown) generating exhaust gas by combusting the fuel; a combustion chamber (not shown) having an ammonia nozzle through which ammonia fuel is injected and a gaseous fuel nozzle through which natural gas is injected, and in which combustion reaction of the fuels occurs to generate combustion gas; a turbine (NH₃ gas turbine F& G system) T rotating a blade using the combustion gas (exhaust gas) discharged from the combustion chamber as a working fluid; and a generator G generating power by the rotational force of the turbine T may be disposed within an enclosure (EC) to be enclosed therein.

In addition, auxiliary equipment essential for operation of the gas turbine (GT) may be disposed within the enclosure (EC).

The combustion air compressed by the air compressor is supplied to the combustion chamber to combust the ammonia or the natural gas. Since the combustion air compressed by the air compressor may contain foreign matter that reduce efficiency of the turbine, a combustion air inlet filter CF may be provided to the combustion air inlet duct (CI) to filter out foreign matter, such as sulfur dust, contained in the suctioned air.

A gas valve unit or gas valve train including an ammonia purging valve (double block and bleed valve) (AG) for preventing leakage of ammonia fuel supplied to the gas turbine (GT) from the ammonia fuel supply unit 100 through an ammonia supply line FL described below, and a gas valve unit or gas valve train including a double block and bleed valve (not shown ) for preventing leakage of natural gas supplied to the gas turbine (GT) from a gaseous fuel supply system 700 described below are disposed on piping extending into the enclosure (EC) and enclosed therein.

The ammonia purging valve (AG) is provided to the ammonia supply line FL to shut off supply of ammonia gas to the gas turbine (GT) when operation is interrupted to ensure safety in accordance with the international and classification regulations.

The ammonia purging valve (AG) includes two double-isolation valves arranged in series to isolate front and rear ends, and a bleed valve disposed between the double-isolation valves to allow a fluid between the double-isolation valves to be vented spontaneously.

According to embodiments of the invention, the gas valve unit for ammonia and the gas valve unit for gaseous fuels are disposed within the enclosure (EC), thus avoiding environmental or safety issues that can arise upon leakage of ammonia or natural gas.

The gaseous fuel supply line GL for supplying natural gas as fuel to the gas turbine (GT) may be provided with two gas valve units for gaseous fuels for operation in case of emergency. In the event of a problem with one gas valve unit for gaseous fuels, the other gas valve unit for gaseous fuels may be used as a backup valve to continue supply of natural gas to the gas turbine (GT) without stopping operation.

On the other hand, the ammonia supply line FL for supplying ammonia as fuel to the gas turbine (GT) may be provided with only one gas valve unit for ammonia and no auxiliary valve.

That is, according to the embodiments of the invention, if a failure occurs in the ammonia gas turbine fuel supply system, preventing in the ammonia fuel mode, the gas turbine (GT) may be automatically switched to natural gas fuel mode.

On the other hand, each of the ammonia supply line FL and the gaseous fuel supply line GL, which extend outside the enclosure (EC), may be realized by a double-wall pipe to prevent fuel leakage. In the drawings, regions provided with the double-wall pipes are indicated by double lines (solid and double-dotted lines surrounding the solid line). The regions including the double-wall pipes may be arranged from the downstream of both the ammonia master supply valve 160 and the gaseous fuel master supply valve 750 to the inlet of the enclosure (EC).

Since the gas turbine (GT) utilizes toxic gaseous ammonia as fuel and other gaseous fuels may include explosive liquefied gases, such as LNG and the like, the interior of the enclosure (EC) may be designed to meet a certain level of ventilation capacity using fans in accordance with the classification regulations.

The gas turbine (GT) may be further provided with a ventilation air inlet duct VI for suctioning ventilation air and a ventilation air outlet duct VO for discharging ventilation air as forcible ventilation devices, and the ventilation air outlet duct VO may be provided with a ventilation fan FN for conveying air.

The ventilation air inlet duct VI may be provided with a ventilation air inlet filter VF for filtering out foreign matter, such as dust, contained in the suctioned air.

Furthermore, a sufficient number of gas detection sensors (not shown) may be disposed inside the enclosure (EC) to detect gas leakage. If a gas leak is detected inside the enclosure (EC) by the gas detection sensor, the ventilation fan FN is stopped, a fire damper is shut off (not shown), and a visual and audible alarm (flash lamp and horn) is activated for 30 seconds to evacuate the crew.

When a gas leak is detected and the gas turbine (GT) and the enclosure (EC) are ventilated, the ventilation air ⑨ discharged through the ventilation fan FN may be vented to the atmosphere after the concentration of ammonia is adjusted in the ammonia catching unit 500 described below.

On the other hand, the classification requires that the ammonia master gas valve 160 and the gaseous fuel master gas valve 750 are closed when the forcible ventilation devices lose their ventilation functions or when leakage occurs from the double-wall pipes.

When the ammonia master gas valve 160 or the gaseous fuel master gas valve 750 is closed, purging from the downstream of the ammonia purging valve or the gaseous fuel purging valve (double block valve or double block and bleed valve) to the gas turbine (GT) may be performed by supplying compressed air from the air compressor.

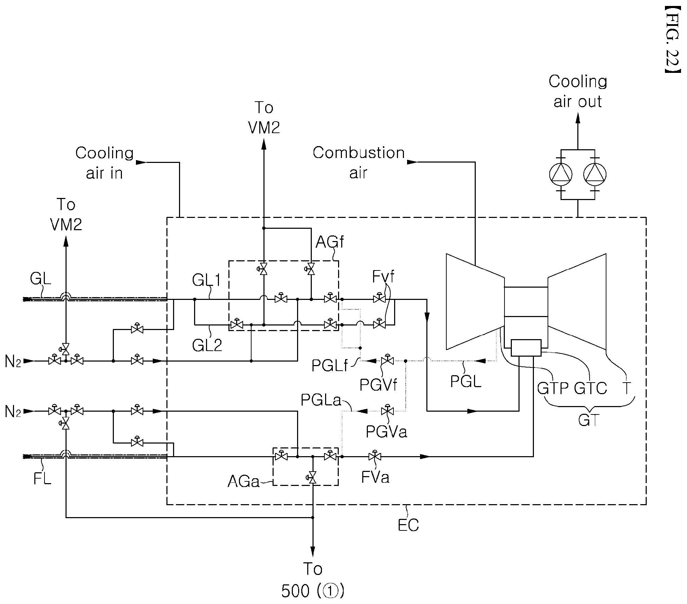

Here, as shown in FIG. 22, the ammonia gas turbine fuel supply system may be provided with compressed air purging lines (PGL, PGLf, PFLa) connected downstream of each of the purging valves (AGf, AGa) provided in the line to be purged (ammonia supply line FL or gaseous fuel supply line GL) from the air compressor of the gas turbine (GT), and compressed air purging valves (PGVf, PGVa) arranged on the compressed air purging lines to supply compressed air for purging.

In addition, purging from the upstream section of the ammonia purging valve AGa to the ammonia master supply valve 160 may be performed using nitrogen generated on board.

The purge gases ① to ⑨ may be discharged through the ammonia catching unit 500 described below, or may be discharged outside through the combustion gas outlet duct (CO) of the gas turbine (GT).

In addition, regardless of whether the fuel is ammonia, natural gas, or a gas mixture, the classification and international regulations require both the ammonia purging valve (double block and bleed valves) Aga and the double block valve of the gaseous fuel purging valves AGf to close during an emergency.

The gas remaining between the double block valves of the ammonia purging valve AGa is spontaneously vented through the bleed valve of the ammonia purging valve, and the vented ammonia may be discharged through the ammonia catching unit 500 in accordance with the classification regulations.

### <Ammonia fuel supply unit 100>

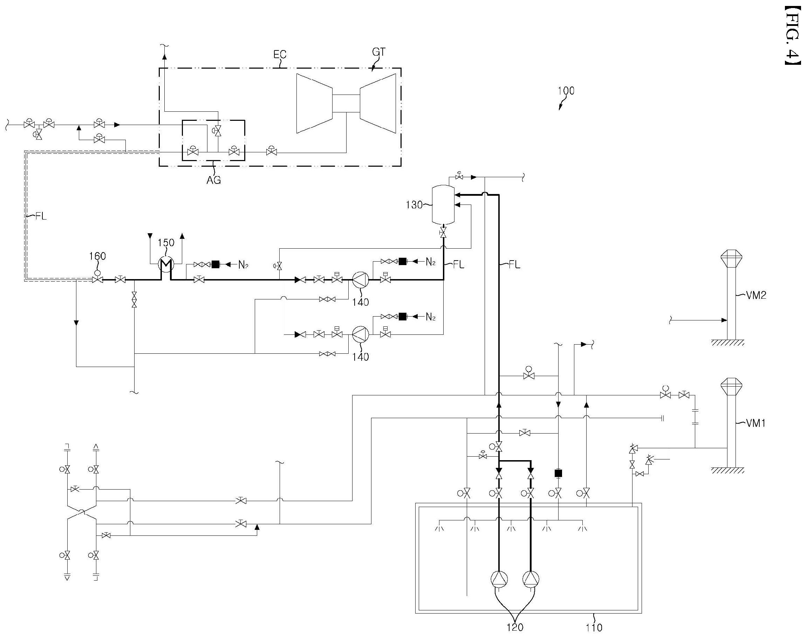

Referring to FIG. 4, the ammonia fuel supply unit 100 according to the embodiments of the invention may include at least one of an ammonia storage tank 110 that stores ammonia in a liquid phase, an ammonia boosting pump 140 that pressurizes liquid-phase ammonia delivered from the ammonia storage tank 110 such that gaseous ammonia supplied from the ammonia fuel supply unit 100 to the gas turbine (GT) can meet a gaseous fuel pressure condition required for the gas turbine (GT), and an ammonia vaporizer 150 that vaporizes the ammonia pressurized by the ammonia boosting pump 140 to generate gaseous ammonia.

The ammonia storage tank 110 may store ammonia in a liquid phase. Generally, since gaseous fuels occupy less volume in liquid phase than in gas phase and thus can be more easily stored in liquid phase, the gaseous fuels are stored in a liquefied state.

In addition, the ammonia storage tank 110 will be described, for example, as a stand-alone non-pressurized tank, which is an IMO Type A tank. The ammonia storage tank 110 may be set to an atmospheric pressure level as an operating pressure and an operating temperature of about -30°C to -35°C or about -33°C to allow ammonia to be stored stably in a liquid phase.

When the ammonia gas turbine fuel supply system according to the embodiments of the invention is applied to a ship, the ship may store ammonia in the liquid phase, vaporize the ammonia stored in the liquid phase to generate gaseous ammonia, burn the gaseous ammonia in the combustion chamber of the gas turbine (GT) to generate combustion gas, and use power generated by driving the gas turbine (GT) using the combustion gas as a working fluid to propel the ship.

The ammonia fuel supply unit 100 according to the embodiments of the invention is designed to supply ammonia corresponding to the pressure and temperature required for the gas turbine (GT).

The gas turbine (GT) requires a gaseous fuel supply pressure of about 30 bar to 40 bar, or 32 bar to 36 bar, or about 34 bar. By way of example, the gas turbine (GT) has a gaseous fuel supply pressure of 34 bar.

Therefore, the ammonia fuel supply unit 100 according to the embodiments of the invention can generate gaseous ammonia fuel at the gas-fuel supply pressure of the gas turbine (GT), that is, at about 34 bar.

The ammonia boosting pump 140 may pressurize the liquid-phase ammonia delivered from the ammonia storage tank 110 such that the vaporized ammonia generated by the ammonia vaporizer 150 can meet the fuel supply conditions of the gas turbine (GT).

The ammonia boosting pump 140 according to the embodiments of the invention may pressurize the liquid-phase ammonia to a pressure of 30 bar to 40 bar, 32 bar to 36 bar, or about 34 bar.

The discharge pressure of the ammonia boosting pump 140 may be set to a pressure slightly higher than the gaseous fuel intake pressure required for the gas turbine (GT), taking into account the pressure loss that can occur during the delivery of ammonia from downstream of the ammonia boosting pump 140 to upstream of the gas turbine (GT).

FIG. 4 illustrates an example in which two ammonia boosting pumps 140 are provided in parallel for redundancy. Here, one ammonia boosting pump 140 may be utilized to pressurize ammonia while the other ammonia boosting pump 140 may be placed in a standby state, ensuring the ammonia gas turbine fuel supply system operates without interruption even if the ammonia boosting pump 140 becomes unavailable. Alternatively, if a flow rate of ammonia required for the gas turbine (GT) is high, both ammonia boosting pumps 140 may be utilized to pressurize ammonia.

The ammonia boosting pump 140 may be provided with a variable frequency drive (VFD) to provide a speed regulation function for regulating the discharge flow rate of ammonia.

On the other hand, the ammonia gas turbine fuel supply system according to the embodiments of the invention includes at least one of an ammonia supply pump 120 that discharges the liquid-phase ammonia from the ammonia storage tank 110, and a buffer tank 130 that stores the liquid-phase ammonia discharged from the ammonia storage tank 110 to cope with load fluctuations before the liquid-phase ammonia is supplied to the ammonia boosting pump 140.

The ammonia supply pump 120 may be a semi-submersible pump disposed on the bottom surface of the ammonia storage tank 110.

Referring to FIG. 4, two ammonia supply pumps 120 are shown by way of example. Here, any one of the two ammonia supply pumps 120 may be used as a redundancy for the other ammonia supply pump 120, or both ammonia supply pumps 120 may be utilized to discharge ammonia from the ammonia storage tank 110.

The liquid-phase ammonia discharged by the ammonia supply pumps 120 may be supplied to the ammonia boosting pump 140. Alternatively, the liquid-phase ammonia may be first stored in the buffer tank 130 and then supplied from the buffer tank 130 to the ammonia boosting pump 140 through the ammonia supply line FL.

Operation of the ammonia supply pump 120 may be controlled based on a liquid level measured in the buffer tank 130.

The buffer tank 130 may store a certain amount of liquid-phase ammonia delivered by the ammonia supply pump 120 and may supply the stored ammonia to the ammonia boosting pump 140 to prevent gaseous ammonia from entering the ammonia boosting pump 140 and causing a problem with the ammonia boosting pump 140.

Gaseous ammonia introduced into the buffer tank 130 or generated within the buffer tank 130 may be reliquefied through the ammonia condensing unit 400 and returned to the ammonia storage tank 110.

In addition, the buffer tank 130 enables stable supply of the liquid-phase ammonia to an intake port of the ammonia boosting pump 140 while maintaining a steady flow of the liquid-phase ammonia. Even if the load of the ammonia boosting pump 140 fluctuates, the flow rate of ammonia flowing from the buffer tank 130 into the ammonia boosting pump 140 may be adjusted to buffer load fluctuations.

For example, when the flow rate of ammonia required for the gas turbine (GT) is below the minimum flow rate of the ammonia boosting pump 140, the ammonia boosting pump 140 may be activated at the minimum flow rate, while returning any excess ammonia flow to the buffer tank 130.

The buffer tank 130 may be provided with a liquid level meter (not shown). Depending on the liquid level measured by the liquid level meter, operation of the ammonia boosting pump 140 may be controlled. When the liquid level in the buffer tank 130 is higher than or equal to a preset value, the ammonia boosting pump 140 may be activated and the liquid-phase ammonia may be supplied to the ammonia boosting pump 140 from the buffer tank 130.

Furthermore, operation of the ammonia supply pump 120 may be controlled according to the liquid level measured by the liquid level meter in the buffer tank 130. If the liquid level in the buffer tank 130 is below a preset value, the ammonia supply pump 120 may be activated to deliver ammonia from the ammonia storage tank 110 to the buffer tank 130. The ammonia supply pump 120 may be controlled to automatically stop when the liquid level in the buffer tank 130 is higher than or equal to the preset value.

Typically, buffer tanks are used to recapture and temporarily store excess liquid fuel supplied to an engine while regulating operation of a boosting pump that supplies fuel to the engine in response to load fluctuations of the engine.

However, according to the embodiments of the invention, since the buffer tank 130 is used primarily to buffer load fluctuations rather than merely receiving or discharging ammonia in direct response to the gas turbine (GT) load, the buffer tank 130 is controlled to maintain the liquid level at or above a preset liquid level.

If the ammonia supply pump 120 is sufficient to meet the pressure of ammonia required for the gas turbine (GT), the ammonia gas turbine fuel supply system may be simplified by omitting the ammonia boosting pump 140 and the buffer tank 130. Here, the liquid-phase ammonia discharged from the ammonia storage tank 110 by the ammonia supply pump 120 may be directly supplied to the ammonia vaporizer 150 without passing through the buffer tank 130.

In description of the embodiments, the ammonia supply pump 120 will be described with reference to the structure including both the buffer tank 130 and the ammonia boosting pump 140.

The ammonia vaporizer (HP (high pressure) vaporizer) 150 vaporizes the liquid-phase ammonia pressurized by the ammonia boosting pump 140 to produce gaseous ammonia. The gaseous ammonia produced by the ammonia vaporizer 150 may be introduced into the combustion chamber of the gas turbine (GT).

On the other hand, to prevent condensation of ammonia while ammonia is supplied from the ammonia fuel supply unit 100 to the gas turbine (GT), the ammonia vaporizer 150 may also serve to heat the ammonia to a temperature higher than the dew point at a corresponding pressure.

For example, an intake pressure of gaseous ammonia required for the gas turbine (GT) according to the embodiments of the invention is about 34 bar, at which the ammonia has a dew point of about 80°C. To ensure that the gaseous ammonia is introduced into the gas turbine (GT), the ammonia vaporizer 150 may change the pressurized liquid-phase ammonia into gaseous ammonia such that the gaseous ammonia has a temperature between 95°C and 105°C, which is about 15°C to 25°C above the dew point, or a temperature between 90°C and 100°C, which is about 10°C to 20°C above the dew point.

In the ammonia vaporizer 150, ammonia undergoes no or negligible phase and pressure changes upon heating.

The ammonia fuel supply unit may be provided with a temperature meter (not shown) downstream of the ammonia vaporizer 150 to measure the temperature of the gaseous ammonia flowing into the gas turbine (GT) from the ammonia vaporizer 150. If a temperature value measured by the temperature meter does not meet a temperature value required for the gas turbine (GT), the ammonia discharged from the ammonia vaporizer 150 may be recirculated to the buffer tank 130.

The ammonia fuel supply unit 100 may further include an ammonia supply line FL extending from the ammonia supply pump 120 to the combustion chamber of the gas turbine (GT) and including at least one of the buffer tank 130, the ammonia boosting pump 140, and the ammonia vaporizer 150.

The ammonia supply line FL may be always filled with liquid ammonia or gaseous ammonia except in emergency situations. Gaseous ammonia may be supplied to the gas turbine (GT) through the ammonia supply line FL at any time when the gas turbine (GT) requires ammonia supply.

The ammonia fuel supply unit 100 is described with reference to the structure including the ammonia supply pump 120, the buffer tank 130, the ammonia boosting pump 140, and the ammonia vaporizer 150, wherein the ammonia supply pump 120, the buffer tank 130, the ammonia boosting pump 140, and the ammonia vaporizer 150 may be sequentially arranged in the ammonia supply line FL.

Liquid ammonia stored in the ammonia storage tank 110 may be ejected by the ammonia supply pump 120 to be introduced into the combustion chamber of the gas turbine (GT) along the ammonia supply line FL through the buffer tank 130, the ammonia boosting pump 140, and the ammonia vaporizer 150.

The ammonia supply line FL is composed of a single line, and if the ammonia supply line FL becomes unavailable for any reason, it is not possible to use ammonia gas as fuel for the gas turbine (GT). Thus, the gas turbine (GT) may be switched to an operation mode which utilizes a gaseous fuel, that is, natural gas, according to the embodiments of the invention.

The ammonia supply line FL may be provided with an ammonia flow regulation valve (not shown) that regulates the flow rate of gaseous ammonia supplied to the gas turbine (GT) from the ammonia fuel supply unit 100 such that a suitable amount of gaseous ammonia is supplied to the gas turbine (GT).

The ammonia supply line FL between the ammonia vaporizer 150 and the gas turbine (GT) may be provided with an ammonia master gas valve 160 that controls supply of gaseous ammonia from the ammonia vaporizer 150 to the gas turbine (GT).

At least one of the temperature meter described above and a pressure meter (not shown) for measuring the pressure of gaseous ammonia may be disposed upstream of the ammonia master gas valve 160.

When the temperature of the gaseous ammonia measured by the temperature meter satisfies a supply temperature required for the gas turbine (GT) and the pressure of the gaseous ammonia measured by the pressure meter satisfies a supply pressure required for the gas turbine (GT), the ammonia master supply valve 160 may be opened to allow the gaseous ammonia to be supplied to the combustion chamber of the gas turbine (GT).

The total amount of ammonia supplied to the gas turbine (GT) through the ammonia fuel supply unit 100 is combusted. That is, according to the embodiments of the invention, no excess ammonia is discharged from the gas turbine (GT).

Thus, the ammonia gas turbine fuel supply system according to the embodiments of the invention does not include piping, such as a return line for returning excess ammonia or ammonia slip back to the ammonia fuel supply unit 100, or recovery devices, such as a recovery buffer tank for receiving the recovered ammonia to maintain the pressure in the system.

If there is excess ammonia or ammonia slip discharged from the gas turbine (GT), there is a need for a recovery buffer tank and a separate return line, complicating the system configuration and control. However, the ammonia gas turbine fuel supply system according to the embodiments of the present invention can eliminate all of these configurations.

For liquid-fueled engines, ammonia is supplied as an incompressible liquid, requiring an excess flow rate of liquid fuel relative to actual demand to ensure a flexible response to load fluctuations and prevent cavitation in the booster pump. Preferably, among the excess of liquid fuel supplied to the engine, only the amount of liquid fuel required for the engine is injected into the engine cylinders and the remainder is recirculated back into the engine.

Since an engine fueled by gaseous ammonia much like the gas turbine does not require an excess fuel supply, a boosting pump and a recirculation line for recirculating excess fuel from the engine are not required.

### <Method of operating the ammonia fuel supply unit 100>

When supplying gaseous ammonia to the gas turbine (GT), the ammonia supply pump 120 provided inside the ammonia storage tank 110 is activated to deliver the ammonia to the buffer tank 130.

When the ammonia liquid level in the buffer tank 130 reaches a certain level, the ammonia boosting pump 140 is activated to pressurize the ammonia and deliver the ammonia to the ammonia vaporizer 150.

The ammonia vaporizer 150 heats the ammonia to a temperature required for the gas turbine and supplies the heated ammonia to the gas turbine (GT).

The temperature of the ammonia is measured downstream of the ammonia vaporizer 150, and when the temperature does not reach the temperature required for the gas turbine (GT), the ammonia is circulated to the buffer tank 130. When the temperature measured downstream of the ammonia vaporizer 150 reaches a supply temperature and pressure required for the gas turbine (GT), the ammonia master supply valve 160 is opened to allow the gaseous ammonia to be supplied to the gas turbine (GT).

The ammonia supply pump 120 is activated according to the liquid level of the buffer tank 130. When the liquid level of the buffer tank 130 is below a certain level, the ammonia supply pump 120 is activated to deliver the ammonia from the ammonia storage tank 110 to the buffer tank 130, and when the liquid level of the buffer tank 130 is at or above a certain level, the ammonia supply pump 120 is automatically stopped.

The ammonia delivered to the buffer tank 130 is pressurized in a liquid phase in the ammonia boosting pump 140, and is then supplied in a gaseous phase to the gas turbine (GT) through the ammonia vaporizer 150.

In the ammonia vaporizer 150, the ammonia may be heated to a temperature of around 100°C, which is about 15°C to 20°C higher than the dew point, to prevent ammonia condensation and combustion in the gas turbine, before being supplied to the gas turbine.

Ammonia gas spontaneously vaporized in the ammonia storage tank 110 may be liquefied through the ammonia condensing unit 400 and re-stored in the ammonia storage tank 110 to adjust the pressure in the ammonia storage tank 110.

Using the flow regulation valve FVa of the gas valve unit for ammonia disposed inside the enclosure (EC) of the gas turbine (GT), the amount of gaseous ammonia required for the gas turbine (GT) is supplied to the combustion chamber of the gas turbine (GT) and a corresponding amount of ammonia is supplied from the ammonia boosting pump 140 to the ammonia vaporizer 150. The ammonia boosting pump 140 may be controlled based on the flow rate or pressure of ammonia introduced into the gas turbine (GT).

### <Ammonia condensing unit 400>

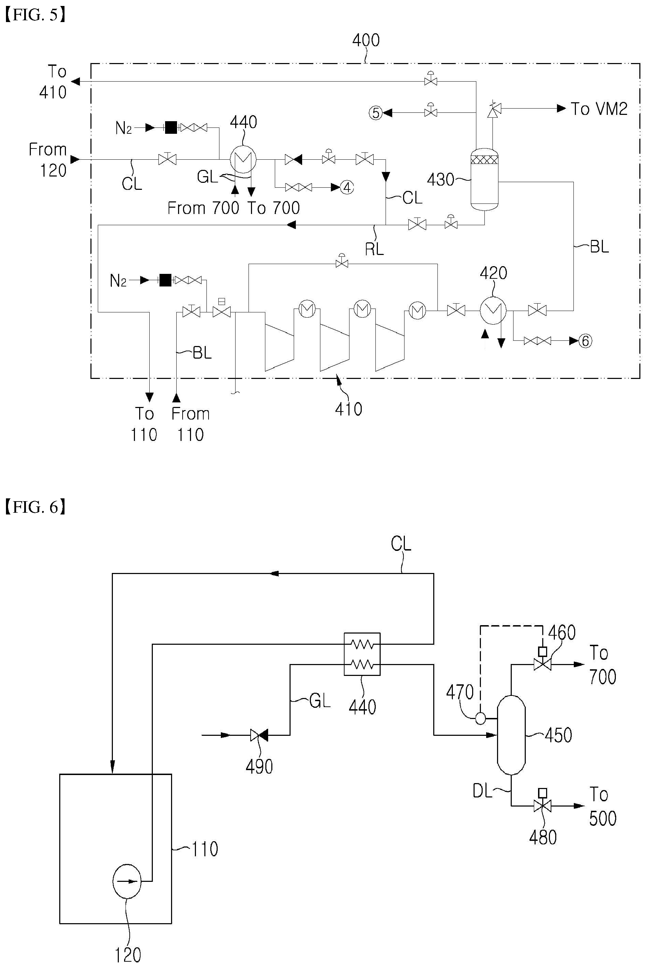

Referring to FIG. 5, the ammonia condensing unit 400 according to the embodiments of the invention may serve to reliquefy the spontaneously vaporized ammonia (ammonia boil-off gas) generated through spontaneous vaporization of the liquid-phase ammonia stored in the ammonia storage tank 110 and to return the ammonia boil-off gas to the ammonia storage tank 110.

The ammonia condensing unit 400 may include an ammonia compressor 410 that compresses the ammonia boil-off gas discharged through an ammonia boil-off gas line BL from the ammonia storage tank 110, and an ammonia condenser 420 that condenses the boil-off gas compressed by the ammonia compressor 410 to generate reliquefied ammonia.

The ammonia compressor 410 may compress the ammonia boil-off gas to 16 bar to 18 bar.

The ammonia boil-off gas compressed by the ammonia compressor 410 may be cooled to about 50°C by an after-cooler (not shown) disposed downstream of the ammonia compressor 410.

According to this embodiment, the ammonia compressor 410 may be an oil-free, three-stage reciprocating compressor. Alternatively, the ammonia compressor 410 may be a lubricated screw-type compressor.

A cold heat source for condensing the ammonia boil-off gas in the ammonia condenser 420 may be fresh water or seawater disposed on-site.

In the ammonia condenser 420, the ammonia boil-off gas may be condensed while being cooled to about 40°C.

Boil-off gas, that is, liquid-phase ammonia, condensed in the ammonia condenser 420 may be returned to the ammonia storage tank 110 along an ammonia reliquefaction line RL.

The ammonia condensing unit 400 may further include a receiver 430 that receives the ammonia boil-off gas cooled through heat exchange with the cold heat source in the ammonia condenser 420.

Even when all of the ammonia boil-off gas is condensed through heat exchange with the cold heat source in the ammonia condenser 420, some condensed liquid ammonia may re-vaporize during transfer. Furthermore, when the amount of ammonia boil-off gas is large or the cold heat energy is insufficient, only some of the ammonia boil-off gas may be condensed and uncondensed ammonia boil-off gas may be present.

According to the embodiments of the invention, the receiver 430 receives the ammonia discharged from the ammonia condenser 420 before the discharged ammonia is supplied to the ammonia storage tank 110, whereby only the liquid-phase ammonia may be supplied from the receiver 430 to the ammonia storage tank 110.

Uncondensed ammonia boil-off gas or gaseous ammonia separated from the receiver 430 may be recirculated to the ammonia compressor 410, or may be, in an emergency, vented to the atmosphere via a vent mast VM2.

The pressure and temperature of the ammonia storage tank 110 can be maintained within operating pressure and temperature ranges by reliquefying the gaseous ammonia generated through spontaneous vaporization of the liquid-phase ammonia in the ammonia storage tank 110, followed by returning the reliquefied ammonia from the receiver 430 to the ammonia storage tank 110.

An internal pressure of the receiver 430 may be controlled by a valve (not shown) disposed downstream of the receiver 430.

In the structure wherein the ammonia gas turbine fuel supply system according to the embodiments of the invention further includes the gaseous fuel supply system 700 and a reliquefaction system 800 described below, the ammonia condensing unit 400 may further include a cold heat recovery unit 440 that recovers cold heat of LNG boil-off gas delivered from the LNG storage tank 600 to the gaseous fuel supply system 700 or the reliquefaction system 800.

The ammonia gas turbine fuel supply system may further include a tank cooling line CL, which branches off from the ammonia supply line FL connecting the ammonia supply pump 120 to the buffer tank 130 and is connected to the cold heat recovery unit 440 such that at least some of the liquid-phase ammonia supplied to the buffer tank 130 by the ammonia supply pump 120 can be supplied to the cold heat recovery unit 440.

For example, if the temperature of the ammonia storage tank 110 is too high, the temperature of the ammonia storage tank 110 may be lowered by heat-exchanging the liquid-phase ammonia discharged by the ammonia supply pump 120 with LNG boil-off gas to cool the liquid-phase ammonia, followed by returning the ammonia back to the ammonia storage tank 110.

The cooled ammonia supplied back to the ammonia storage tank 110 through the tank cooling line CL may be supplied in a subcooled state by spraying from the top of the ammonia storage tank 110.

In addition, if cold heat of the LNG boil-off gas is not recovered in a reliquefier 830 described below, the LNG boil-off gas may be supplied to the cold heat recovery unit 440 to recover the cold heat.

### <Cooling of ammonia storage tank utilizing cold heat of LNG boil-off gas and prevention of ammonia leakage into gaseous fuel supply system>

In a ship according to embodiments of the invention, the internal pressure of the ammonia storage tank 110 may be controlled by reliquefying ammonia boil-off gas generated from ammonia stored in the ammonia storage tank 110 as described above through the ammonia condensing unit 400, followed by returning the reliquefied ammonia to the ammonia storage tank 110.

Cooling and internal pressure regulation of the ammonia storage tank 110 may be performed using the cold heat recovery unit 440 that utilizes cold heat of LNG boil-off gas.

To this end, the ship is provided with a tank cooling line CL that cools ammonia delivered from the ammonia storage tank using cold heat of LNG boil-off gas and returns the boil-off gas to the ammonia storage tank 110, in which the ammonia supply pump 120 delivers ammonia from the ammonia storage tank 110 to the ammonia fuel supply unit 100.

The tank cooling line CL is provided with the cold heat recovery unit 440 that cools the ammonia through heat exchange with the LNG boil-off gas generated in the LNG storage tank.

The ammonia pumped by the ammonia supply pump 120 may be returned in a sub-cooled state to the ammonia storage tank 110 through heat exchange with the LNG boil-off gas in the cold heat recovery unit 440.

The LNG boil-off gas generated in the LNG storage tank 600 is delivered to the gaseous fuel supply system 700 through a gaseous fuel supply line GL after cold heat recovery therefrom in the cold heat recovery unit 440, and, when the reliquefaction system 800 is activated to liquefy excess LNG boil-off gas, the LNG boil-off gas generated in the LNG storage tank 600 may be delivered to the gaseous fuel supply system 700 via primary cold heat recovery in the reliquefaction system 830 and secondary cold heat recovery in the cold heat recovery unit 440.

Subcooled ammonia having passed through the cold heat recovery unit 440 may be injected toward the top of the ammonia storage tank 110. By injecting the subcooled ammonia to cool the top of the ammonia storage tank, the temperature at the top of the tank can be lowered to suppress generation of ammonia boil-off gas while regulating the interior pressure of the ammonia storage tank. Ammonia returned to the ammonia storage tank through reliquefaction in the ammonia condensing unit 400 may also be sprayed toward the top of the ammonia storage tank to cool the top of the ammonia storage tank.

In this way, the regulation of the temperature and pressure of the ammonia storage tank through the cold heat recovery unit 440 and the tank cooling line CL can reduce operation of the ammonia condensing unit, thereby reducing operation power and the use of seawater or fresh water for cooling. Furthermore, when the pressure of the ammonia storage tank can be regulated through the cold heat recovery unit and the tank cooling line without reliquefaction of ammonia boil-off gas, omission of the ammonia condensing unit 400 to reduce the CAPEX may be considered.

On the other hand, even if the ammonia storage tank 110 and the LNG storage tank 600 are set to operating pressures at an atmospheric pressure level, ammonia is pumped and delivered from the ammonia storage tank through the ammonia supply pump 120 and LNG boil-off gas is spontaneously produced and discharged from the LNG storage tank. Thus, the flow of ammonia through the cold heat recovery unit 440 has a higher pressure than the flow of LNG boil-off gas. Accordingly, if the cold heat recovery unit in the form of a heat exchanger is punctured or damaged, ammonia can leak into the flow of LNG boil-off gas. Ammonia leakage into the gaseous fuel supply system 700 via the gaseous fuel supply line GL can lead to damage to and failure of the piping and equipment.

To prevent this problem, a device may be configured to detect ammonia leakage and suitably vent the leaked ammonia upon detection.

FIG. 6 shows a modification of the ammonia cooler that further includes a device capable of detecting and venting ammonia leaks from the cold heat recovery unit.

Referring to FIG. 6, the ammonia cooler according to this embodiment includes a gas receiver 450 provided to the gaseous fuel supply line GL to receive LNG boil-off gas that has passed through the cold heat recovery unit, and an ammonia detector 470 that detects the presence of ammonia in the gas receiver.

A non-return valve 490 is disposed upstream of the gas receiver in the gaseous fuel supply line GL and an emergency shutdown (ESD) valve 460 is disposed downstream of the gas receiver in the gaseous fuel supply line.

In addition, the ammonia cooler is provided with an ammonia discharge line (DL) to discharge ammonia from the gas receiver 450 when ammonia is detected by the ammonia detector 470, and an ammonia discharge valve 480 disposed on the ammonia discharge line.

LNG boil-off gas having passed through the cold heat recovery device 440 and the gas receiver 450 via the gaseous fuel supply line GL is delivered to the gaseous fuel supply system 700 to be supplied as fuel for the gas turbine or the like.

When ammonia is detected in the gas receiver 450, the emergency shutdown valve 460 is immediately controlled to close by the ammonia detector 470 to prevent ammonia from entering the gaseous fuel supply system 700 from the gas receiver. The ammonia detector 470 opens the ammonia vent valve 480 to discharge the remaining ammonia in the gaseous fuel supply line GL from the cold heat recovery unit 440 to the gas receiver 450 through the ammonia discharge line (DL).

The ammonia discharged through the ammonia discharge line may be delivered to the ammonia catching unit 500, which is disposed on board to control the ammonia concentration of the purge gas containing ammonia.

As described above, according to this embodiment, the internal pressure of the ammonia storage tank may be controlled by cooling the ammonia storage tank with the cold heat of the LNG boil-off gas, thereby reducing use of power for operating the ammonia condensing unit. Furthermore, even if the cold heat recovery unit is cracked or damaged, it is possible to reduce the difference in operating pressure, causing damage or failure of the piping and equipment through introduction of ammonia into the LNG boil-off gas.

### <Purging Method>

When performing maintenance of the ammonia gas turbine fuel supply system according to the embodiments of the invention, or when the operation mode of the gas turbine (GT) using ammonia is interrupted, such as when a problem occurs during operation of the gas turbine (GT) in the ammonia fuel mode or when it is necessary to switch the operation mode of the gas turbine (GT) to the natural gas fuel mode, it is necessary to purge the piping or equipment through which ammonia flows before resuming operation.

For the purpose of purging, a purging supply unit for supplying a purging fluid is disposed either upstream or downstream of equipment requiring purging, and is provided with a purging discharge port configured to vent the purge gas used to the remaining ammonia from the piping or equipment.

In description of the embodiments, although nitrogen is described as the purging fluid by way of example, it should be understood that other inert gases or compressed air from the air compressor described above may be used instead of nitrogen.

The purging supply unit may be provided with a purging valve (not shown) to supply the purging fluid to each line in certain situations, i.e., when purging is required.

When purging is to be performed, each purging point is isolated by stopping the system operation and closing the valve, and nitrogen or compressed air compressed in the air compressor of the gas turbine (GT) is supplied to the purging supply unit at each purging point requiring purging. Then, the nitrogen or compressed air supplied to the purging supply unit flows through the piping and equipment to generate purge gas together with the remaining ammonia, which in turn is discharged through the purging outlet.

In particular, the line extending from the downstream side of the purging valve to the gas turbine must be purged upon fuel switching of the gas turbine (GT).

When purging is performed, the purging valve of the line requiring purging is opened to supply the compressed air to the downstream side of the purging valve, and the remaining gas is introduced into the combustion chamber for combustion by the compressed air.

The purge gas containing the purged fuel from the downstream side of the purging valve to the gas turbine (GT) may be used as fuel for the gas turbine (GT), thereby saving fuel.

In general, reports say that, since natural gas is discharged into the atmosphere upon purging of natural gas, the global warming impact of natural gas is 28 times that of CO₂ (ICCT report, 100 years without Climate Carbon Feedback), and the global warming impact of natural gas is 2.75 times that of CO₂ upon discharge after combustion (MEPC. 308(73), Conversion factor between fuel consumption and CO₂ emission).

Therefore, although it has been shown that discharging natural gas without combustion has about 10 times more environmental impact than discharging natural gas after combustion, the system according to embodiments of the invention can reduce the environmental impact by discharging the purged gas after combustion.

For the ammonia supply line FL, the purge gas must be discharged after reducing the concentration of ammonia to a concentration below a certain level using the ammonia catching unit 500. However, according to the embodiments of the invention, since the purge gas can be treated through combustion in the gas turbine (GT), the purge gas is not required to pass through the ammonia catching unit 500, thereby reducing the capacity of the ammonia catching unit 500 and operating costs.

In addition, purging with compressed air can reduce the amount of N₂ consumed during purging with N₂, thereby reducing operating costs for generating N₂. The purging method with compressed air from a region downstream of the valve to the gas turbine (GT) will be described below.

Herein, nitrogen discharged with ammonia or a mixture of compressed air and ammonia will be referred to as purge gas.

In the attached drawings, nitrogen supplied to the purging supply unit is denoted by N₂ and the purge gas discharged through the purging outlet is denoted by circled numbers ①, ②, ③, ④, ⑤, ⑥, ⑦, ⑧, and ⑨, respectively.

When purging is performed, nitrogen may be supplied to each point of the ammonia fuel supply unit 100, for example, upstream of the ammonia boosting pump 140, to be discharged downstream thereof, and nitrogen may be supplied upstream of the ammonia vaporizer 150 to be discharged downstream thereof.

Furthermore, purging can also be performed with respect to the ammonia condensing unit 400. To this end, nitrogen may be supplied to each point of the ammonia condensing unit 400, for example, upstream of the ammonia compressor 410, to be discharged downstream of the ammonia condenser 420 and downstream of the receiver 430, that is, into a line where gas phase is discharged from the receiver 430.

In description of the embodiments, the purge gas may include at least one of purge gas ①, ② generated by purging the ammonia boosting pump 140 and the ammonia supply line FL, which is connected upstream and downstream of the ammonia boosting pump 140, and purge gas ③ generated by purging the ammonia vaporizer 150 and the ammonia supply line FL, which is connected upstream and downstream of the ammonia vaporizer 150.

In addition, the purge gas may include at least one of purge gas ③ generated by purging the cold heat recovery unit 440, the tank cooling line CL connected upstream and downstream of the cold heat recovery unit 440, and purge gas ④ generated by purging the receiver 430, and purge gas ⑥ generated by purging the ammonia condenser 420 and the ammonia boil-off gas line (BL) from upstream of the ammonia compressor 410 to downstream of the ammonia condenser 420.

The purge gas may also include at least one of purge gas ⑦ generated by purging a region between the double block valves of the ammonia purging valve (AG), purge gas ⑧ generated by purging the double-structure piping from upstream of the ammonia purging valve (AG) to downstream of the ammonia master supply valve 160, and purge gas ⑨ generated by purging or venting the inside of the gas turbine (GT) or the inside of the enclosure (EC).

Whether or not the aforementioned purge gas, purging supply unit, and purging outlets are shown in the respective drawings does not imply inclusion or exclusion of each of the purge gas, purging supply unit, and purging outlets as essential components in application of embodiments of the invention, and may be omitted or suitably shown for clarity of the drawings.

### <Purging method using compressed air of gas turbine>

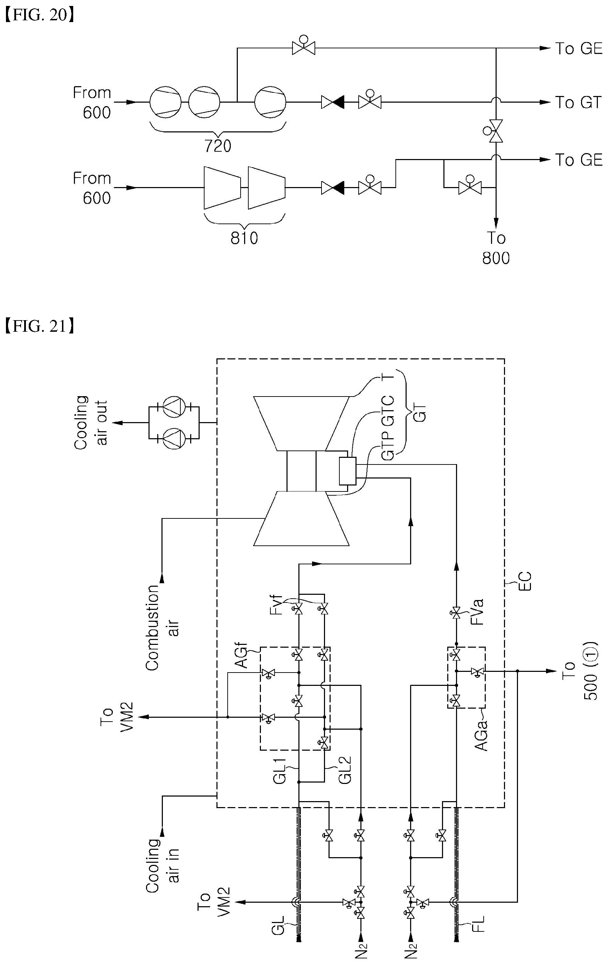

As described above, for fuel switching, maintenance, and the like, it is necessary to purge the gaseous fuel supply line GL and the ammonia supply line FL connected to the gas turbine, as shown in FIG. 21, to discharge the gas in the corresponding piping.

Although there is no regulation on direct discharge of natural gas, there is regulation on discharge of ammonia gas not to be discharged above a certain concentration. For operation with ammonia, the gas turbine is switched to the natural gas fuel mode and operates on natural gas for a certain period of time before the gas turbine is stopped.

The air compressor, which compresses combustion air in the gas turbine to generate compressed air, continues to rotate by inertia for a period of time even after the gas turbine is stopped. Here, the compressed air may be used to effectively purge the lines extending to the gas turbine, particularly from the downstream side of the purging valve of the piping filled with fuel prior to fuel switching or shutdown. Up to the upstream side of the purging valve of each line, nitrogen is supplied to purge each line, as described above.

Referring to FIG. 22, to supply the compressed air to deliver remaining fuel between the gas turbines downstream of the double block valve AGf or AGa of the corresponding piping to the combustion chamber GTC, a first compressed air purging line PGLf extends from the air compressor GTP to a downstream side of the double block and bleed valve AGf disposed on the gaseous fuel supply line GL, and a second compressed air purging line PGLa extends from the air compressor GTP to a downstream side of the ammonia purging valve AGa disposed on the ammonia supply line FL. The first compressed air purging line is provided with a first compressed air purging valve PGVf and the second compressed air purging line is provided with a second compressed air purging valve PGVa.

Upon fuel switching of the gas turbine, the double block valve of the piping filled with fuel before switching is closed, and the compressed air purging valve provided to the line connected to the corresponding piping among the first and second compressed air purging lines is opened to supply the compressed air to the piping filled with fuel before switching such that the remaining fuel between the gas turbines downstream of the double block valve of the corresponding piping is delivered to the combustion chamber GTC for combustion and is then discharged as exhaust gas.

In particular, when switching from the ammonia fuel mode, which has regulations on direct emissions, to the natural gas fuel mode, or when switching to the natural gas fuel mode for a period of time to stop the gas turbine during operation in the ammonia fuel mode, the ammonia supply line may be purged in this way and the ammonia fuel remaining in the piping may be combusted together in the gas turbine to be vented as exhaust gas. In addition, the natural gas remaining in the piping may also be treated as fuel in the gas turbine by combusting the remaining natural gas in the combustion chamber of the gas turbine. Thus, according to this embodiment, the fuel gas discarded during purging may be utilized through combustion in the gas turbine, thereby reducing fuel usage and effectively treating toxic gases to reduce environmental impact and meet emission control standards.

### <Ammonia catching unit 500>

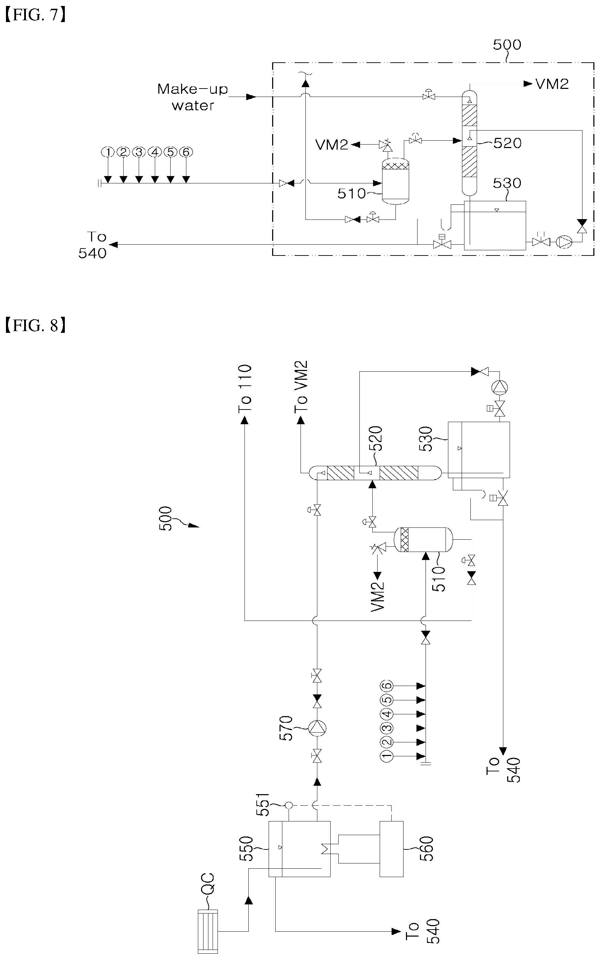

Referring to FIG. 7, the ammonia catching unit 500 according to the embodiments of the invention may serve to control the ammonia concentration in the purge gases ① to ⑨ generated by purging remaining ammonia in at least one of the ammonia fuel supply unit 100 and the ammonia condensing unit 400 when the gas turbine (GT) operating in the ammonia fuel mode or in the gas mixture fuel mode stops.

The classification regulations limit the concentration of ammonia that can be discharged into the atmosphere, except for ammonia discharged in an emergency. To comply with the regulations, the ammonia gas turbine fuel supply system may be provided with the ammonia catching unit 500.

The purge gas generated by purging at least one of the ammonia fuel supply unit 100 and the ammonia condensing unit 400 is a mixture of nitrogen and ammonia supplied for purging and may be vented to the atmosphere through the vent mast VM2 after passing through the ammonia catching unit 500 to adjust the ammonia concentration.

The ammonia catching unit 500 may be activated when the gas turbine (GT) operates in the ammonia fuel mode or in the gas mixture fuel mode and trips, shuts down, or switches to the natural gas fuel mode.

Except for gases vented to the atmosphere through the emergency vent mast VM1 in an emergency, as defined by the classification society, all ammonia-containing gases from the ammonia gas turbine fuel supply system may be vented to the atmosphere via the operational vent mast VM2 after the ammonia concentration is regulated through the ammonia catching unit 500.

The ammonia catching unit 500 may include a separator 510 performing gas-liquid separation of the purge gases ① to ⑨ generated during purging, and an absorber 520 separating ammonia from a gaseous component separated in the separator 510.

A liquid component separated by the separator 510 may be liquid-phase ammonia delivered from the gas turbine (GT), the ammonia fuel supply unit 100, or the ammonia condensing unit 400, or liquid-phase ammonia condensed during delivery with nitrogen.

The liquid-phase ammonia separated by the separator 510 may be returned to the ammonia storage tank 110 for use as fuel again.

In addition, the gaseous component separated by the separator 510 may be a mixture of nitrogen and gaseous ammonia supplied for purging.

The gaseous component separated by the separator 510 is supplied to the absorber 520 which captures ammonia in the gas mixture. Once the ammonia is captured, the remaining nitrogen-rich gas meets emission regulations and can be vented to the atmosphere via the vent mast VM2.

The absorber 520 may be provided with a make-up water supply unit (not shown) that supplies water as a solvent to capture ammonia in the gas mixture.

The ammonia catching unit may be further provided with a water tank (not shown) that stores absorption water for supply to the absorber 520, and the absorption water may be supplied from the water tank to the absorber 520.

In description of the embodiments, the absorption water may be seawater or technical water.

The gas mixture supplied to the absorber 520 undergoes material exchange with the water supplied to the absorber 520 such that the gaseous ammonia in the gas mixture dissolves in the water.

The water containing the ammonia dissolved therein may be discharged through a lower portion of the absorber 520.

The remaining gaseous component, from which the ammonia is removed through exchange with the water in the absorber 520, is nitrogen or a nitrogen-rich gas containing a trace amount of ammonia and may be delivered to the vent mast VM2 through the upper portion of the absorber 520.

The ammonia-dissolved water discharged through the lower portion of the absorber 520 is received in the drain tank 530. A water-circulation pump (not shown) circulates the water from the drain tank 530 back to the absorber 520. This process allows further absorption of the ammonia in the lower portion of the absorber 520 by the circulated water, thereby ensuring that no ammonia is discharged.

In addition, when water loss occurs during this process, the make-up water supply unit may provide make-up water to dissolve the ammonia in the absorber 520.

Furthermore, the ammonia catching unit may be further provided with an acidity meter (not shown) to measure acidity of the drain tank 530. If the measured acidity is not within a preset value, i.e., if the pH is higher than a preset standard, make-up water may be supplied to the absorber 520 through the make-up water supply unit to maintain the acidity of water recirculated from the drain tank 530 to the absorber 520.

In addition, if a high concentration of ammonia-dissolved in water is generated through accumulation of the ammonia-dissolved water in the drain tank 530, the ammonia-dissolved water may be delivered to a separate ammonia bilge tank 540 or discharged directly into the sea.

Typically, since excess or slipped ammonia is inevitably discharged from the engine, the ammonia gas turbine fuel supply system requires a recovery line or recovery equipment to recover the ammonia. Compared with a typical ammonia fuel supply unit, since the ammonia gas turbine fuel supply system according to the embodiments is configured to generate no excess or slipped ammonia, the amount of ammonia contained in the purge gas entering the ammonia catching unit 500 is relatively small.

Thus, according to the embodiments of the invention, pure water alone can dissolve the ammonia in the purge gas without the use of any chemical solvents, thereby reducing the concentration of ammonia in the purge gas vented to the atmosphere.

Referring to FIG. 8, the ammonia catching unit 500 may further include a make-up water cooling unit that cools make-up water to be supplied to the absorber 520.

Ammonia interacts with water through hydrogen bonding and is highly soluble at room temperature. Since a hydrogen bond is a type of weak electrostatic interaction, increase in temperature of water leads to increase in activity of water molecules, making the bonding between the ammonia molecules and the water molecules more difficult while making the hydrogen bond weaker.

Accordingly, the solubility of ammonia decreases with increasing temperature of water and increases with decreasing temperature of water. When the temperature of the water decreases from about 36°C to about 5°C, the solubility of ammonia increases two fold or more.

As a means for increasing the solubility of ammonia in water, the make-up water cooling unit can maintain the water supplied to the absorber 520 at a low temperature.

The make-up water cooling unit may be applied to a ship including the ammonia gas turbine fuel supply system according to the embodiments of the invention.

Typically, a ship is provided with a cabin area Q, which is a working and resting area for the crew, and the cabin area Q is provided with an air conditioning unit QC for regulating the temperature of the cabin area Q. The air conditioning unit QC is configured to transfer cold heat of a refrigerant into the cabin area Q while water circulates through a refrigerant cycle, in which the water is condensed to generate low-temperature clean drain water during circulation through the refrigerant cycle. In general, the clean drain water generated in the air conditioning unit QC has a temperature of about 6°C to about 13°C based on air conditioning in summer.

The make-up water cooling unit may include a clean drain water tank 550 that stores clean drain water, and a clean drain pump 570 that supplies water stored in the clean drain water tank 550 to the absorber 520.

The clean drain water tank 550 may be any water tank described above.

Since the clean drain water has a temperature of 6°C to 13°C, supply of the clean drain water can increase the solubility of ammonia, as compared with supply of fresh water having a temperature of about 36°C to the absorber 520.

Although this embodiment is illustrated with an example in which the low-temperature condensate water generated by cooling cabin air in the air conditioning unit QC is stored in the clean drain water tank 550, it should be understood that other implementations are possible. Alternatively, any low-temperature fluid, such as a coolant, or low-temperature water generated in a ship may also be used. Herein, "low temperature" may refer to a temperature less than 36°C or in the range of 6°C to 13°C or 1°C to 20°C.

The make-up water cooling unit may further include a drain temperature meter 551 configured to measure the temperature of the clean drain tank 550, and a chiller 560 configured to cool the clean drain tank 550.

When the temperature of the clean drain tank 550 measured by the drain temperature meter 551 is above a preset value, the chiller 560 may be activated to cool the clean drain tank 550 below the preset value.

In this embodiment, the preset temperature of the clean drain tank 550 may be in the range of 5°C to 10°C.

In summer, since the air conditioning unit QC is activated in a cooling mode, the clean drain water has a sufficiently low temperature. However, the temperature of the clean drain water produced in spring, fall, and winter is lower than the temperature of the clean drain water produced in summer. The chiller 560 according to this embodiment may be activated mainly in spring, fall, and winter.

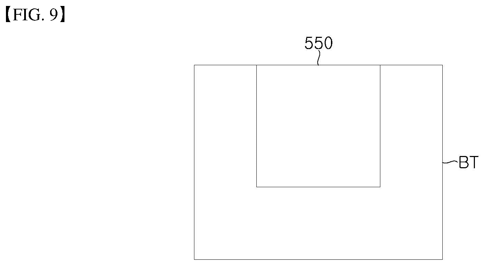

On the other hand, referring to FIG. 9, the clean drain tank 550 may be disposed within a ballast tank BT. The ballast tank BT serves to maintain the balance of the hull by adjusting the liquid level of seawater stored in the ballast tank BT, in which the seawater stored in the ballast tank BT has a temperature of about 0°C to about 32°C.

Thus, as the clean drain tank 550 is disposed within the ballast tank BT, the clean drain tank 550 can maintain a constant temperature.

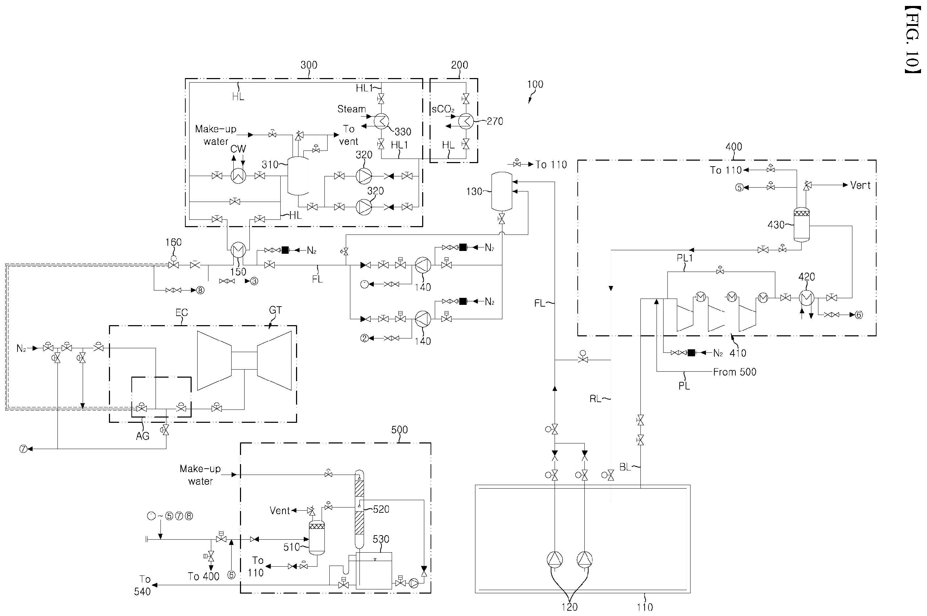

In another embodiment, referring to FIG. 10, the ammonia catching unit 500 may further include a purge gas condensing line PL that sends the purge gases ① to ⑨ delivered to the ammonia catching unit 500 to the ammonia condensing unit 400.

When the purge gas condensing line PL is open, at least some of the purge gases ① to ⑨ can be delivered upstream of the ammonia compressor 410 through the purge gas condensing line PL before entering the absorber 520.

In this embodiment, the purge gas that may be supplied to the ammonia condensing unit 400 through the purge gas condensing line PL may include at least one of the purge gases ①, ②, ③, ④, ⑤, ⑦, and ⑧ described above.

In this embodiment, all of the purge gases ① to ③, ⑤, ⑦, and ⑧ are generated downstream of the ammonia boosting pump 140 or downstream of the ammonia compressor 410. That is, these purge gases contain ammonia that is compressed to the pressure of fuel required for the gas turbine (GT), i.e., about 34 barg to 37 barg.

When the purge gases ① to ③, ⑤, ⑦, and ⑧ mentioned in this embodiment are supplied to the ammonia condenser 420 through a compression branch line PL1, which is connected to the purge gas condensing line PL such that the purge gases are supplied to the condenser 420 after bypassing the ammonia compressor 410, the ammonia components in the purge gas can be condensed through heat exchange in the ammonia condenser 420.

If the compressed ammonia is under reduced pressure while being purged, the purge gases ① to ③, ⑤, ⑦, and ⑧ may also be supplied to the ammonia compressor 410 through the purge gas condensing line PL to be compressed and sent to the ammonia condenser 420.

In the ammonia compressor 410, the purge gas may be compressed to about 18 bar.

After heat exchange in the ammonia condenser 420, the purge gas, in which the ammonia components are condensed, enters the receiver 430 through the ammonia boil-off gas line BL.

In the receiver 430, the purge gas, in which the ammonia components are condensed, is subjected to gas-liquid separation such that liquid-phase ammonia can be returned to the ammonia storage tank 110, and the remaining purge gas that is not condensed, that is, nitrogen or compressed air supplied for purging, can be recirculated back to the ammonia catching unit 500 or vented to the atmosphere through the vent mast VM2.

According to this embodiment, there is an effect of recovering and reusing as much of the ammonia in the purge gas as possible.

However, in this embodiment, the purge gas ⑥ generated while purging the ammonia compressor 410, the ammonia condenser 420, and the ammonia boil-off gas line BL from upstream of the ammonia compressor 410 to downstream of the ammonia condenser 420 may be supplied downstream of a point where the purge gas condensing line PL branches off from the piping through which the purge gas is supplied to the absorber 520, thereby ensuring that the purge gas ⑥ does not enter the purge gas condensing line PL.

That is, the purge gas ⑥ may be supplied directly to the separator 510 without being supplied to the ammonia condensing unit 400.

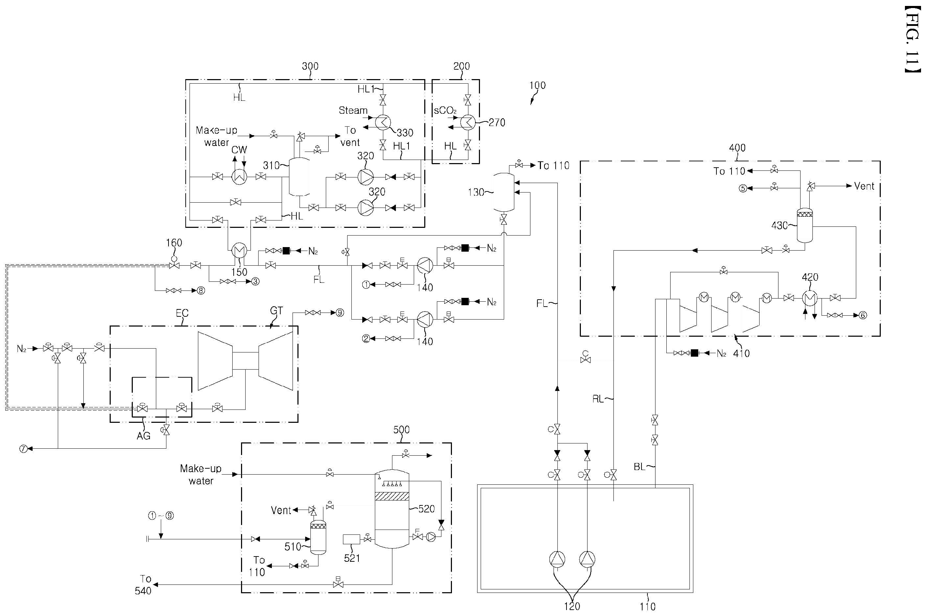

Furthermore, referring to FIG. 11, the ammonia catching unit 500 according to another embodiment may further include a solvent injector 521 for injecting a solvent into the absorber 520 capable of removing ammonia through chemical reaction.

If the concentration of ammonia in the gas discharged from the absorber 520 is not reduced below a preset threshold value for a certain period of time, the solvent injector 521 may be used to inject a solvent capable of absorbing ammonia into the absorber 520.

This embodiment may be applicable when it is necessary to treat purge gas containing a higher concentration of ammonia than the above embodiment where water is injected into the absorber 520 to absorb the ammonia.

In this embodiment, the purge gas may include at least one of the purge gases ① to ⑨ described above.

The solvent injector 521 may be activated when the concentration of ammonia in the gas discharged from the absorber 520 does not fall below a threshold value for a certain period of time, even when water is used to dissolve the ammonia in the absorber 520.

The solvent injector 521 may be used as a means for quickly adjusting the concentration of ammonia in the gas discharged from the absorber 520 by injecting a solvent into the absorber 520 to induce chemical reaction with the ammonia.

According to this embodiment, the solvent injector 521 may be useful in cases where the concentration of ammonia in the purge gas is high, such as leakage of ammonia within the enclosure (EC) of the gas turbine (GT).

### <Waste heat recovery unit (sCO₂ power system) 200>

Referring to FIG. 7, the waste heat recovery unit 200 is a closed-loop cycle that uses supercritical carbon dioxide (sCO₂) as a working fluid. The waste heat recovery unit 200 generates supercritical carbon dioxide by recovering waste heat from exhaust gas (combustion gas) of the gas turbine (GT) to heat the carbon dioxide, and expands the supercritical carbon dioxide to generate power as expansion work, thereby generating additional power in addition to the power generated by the gas turbine (GT).

Compared with typical steam generators that generate power by driving a turbine using steam as a working fluid, supercritical carbon dioxide used as a working fluid reduces friction loss, thereby increasing efficiency of power generation. In addition, the supercritical carbon dioxide has a higher density than steam, thereby reducing the volume of fluid per mass.

The waste heat recovery unit 200 may include at least one of an exhaust line (EL) that discharges exhaust gas from the gas turbine (GT), a waste heat recovery device (main heater) 220 that recovers waste heat of the exhaust gas discharged through the exhaust line (EL) to generate supercritical carbon dioxide, a supercritical turbine (sCO₂ turbine) 230 that generates power by driving the turbine using the supercritical carbon dioxide generated by the waste heat recovery device 220 as a working fluid, and a supercritical compressor (sCO₂ compressor) 260 that compresses the expanded carbon dioxide in the supercritical turbine 230 to generate supercritical carbon dioxide again.

The waste heat recovery unit 200 may further include a supercritical line (SL) that connects the waste heat recovery device 220, the supercritical turbine 230, and the supercritical compressor 260 to form a closed cycle.

A medium circulating through the supercritical line SL may be carbon dioxide. Carbon dioxide has a critical temperature of 31°C and a critical pressure of 73.8 bar. At normal pressure and temperature (1 bar, 20°C), air and carbon dioxide have densities of 1.29 kg/m³ and 1.97 kg/m³, respectively, which are denser than that of compressed air. The efficiency of the gas turbine (GT) can be improved by recovering waste heat from exhaust gas using dense supercritical carbon dioxide as a medium.

The carbon dioxide may be repeatedly circulated to the waste heat recovery device 220 along the supercritical line SL through the waste heat recovery device 220, the supercritical turbine 230, and the supercritical compressor 260.

In the supercritical compressor 260, the carbon dioxide may be compressed to a critical pressure of 73.8 bar or higher. The carbon dioxide compressed in the supercritical compressor 260 undergoes increase in temperature and pressure.

In the waste heat recovery device 220, supercritical carbon dioxide is generated by recovering waste heat of the exhaust gas discharged from the gas turbine (GT) through the exhaust line (EL) to heat the compressed carbon dioxide in the supercritical compressor 260.

The carbon dioxide having passed through the supercritical compressor 260 and the waste heat recovery device 220 has pressure and temperature conditions that meet the supercritical conditions for carbon dioxide, and the supercritical carbon dioxide generated by the supercritical compressor 260 and the waste heat recovery device 220 may be supplied to the supercritical turbine 230.

Work generated through expansion of the supercritical carbon dioxide by the supercritical turbine 230 may be converted into electricity to generate power, and the power generated by the supercritical turbine 230 may be supplied to an on-site power demand.

Furthermore, the waste heat recovery unit 200 according to embodiments of the invention may include at least one of a preheater 210 disposed on the supercritical line SL to further recover residual heat of the exhaust gas from which waste heat has been recovered in the waste heat recovery device 220, a recuperator 240 recovering residual heat of carbon dioxide discharged after driving the supercritical turbine 230, and a pre-cooler 250 maintaining the carbon dioxide at a constant temperature before it is introduced into the supercritical compressor 260.

In description of the embodiments, reference will be made to the structure including all of the preheater 210, the recuperator 240, and pre-cooler 250. Optionally, only one of the preheater 210, the recuperator 240, and the pre-cooler 250 may be utilized to recover residual heat of the carbon dioxide.

The preheater 210 may heat the compressed carbon dioxide supplied from the supercritical compressor 260 to the waste heat recovery device 220 by further recovering residual heat from the exhaust gas from which waste heat has been recovered in the waste heat recovery device 220.

After heat exchange in the preheater 210, the cooled exhaust gas may be vented to the atmosphere and the heated compressed carbon dioxide may be introduced into the waste heat recovery device 220.

In the recuperator 240, the expanded carbon dioxide that is discharged in an expanded state while driving the supercritical turbine 230 and supplied to the supercritical compressor 260 may be subjected to heat exchange with the compressed carbon dioxide supplied from the supercritical compressor 260 to the waste heat recovery device 220, and the compressed carbon dioxide may be heated with the residual heat of the expanded carbon dioxide.

The carbon dioxide heated with the residual heat of the expanded carbon dioxide in the recuperator 240 may have a temperature of about 110°C.

After heat exchange in the recuperator 240, the cooled expanded carbon dioxide may be introduced into the supercritical compressor 260 and the heated compressed carbon dioxide may be introduced into the waste heat recovery device 220.

One of the preheater 210 and the recuperator 240 may be disposed on the supercritical line SL, and the other may be disposed on a supercritical branch line SL1 that branches off from the supercritical line SL connecting the supercritical compressor 260 and the waste heat recovery device 220.

That is, the compressed carbon dioxide compressed in the supercritical compressor 260 may be preheated in at least one of the preheater 210 and the recuperator 240 before being introduced into the waste heat recovery device 220.

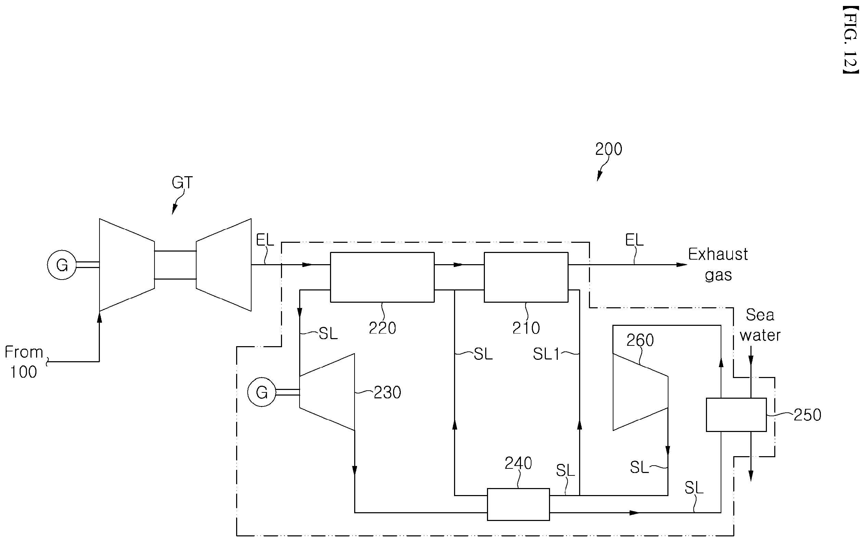

FIG. 12 illustrates an example in which the recuperator 240 is disposed on the supercritical line SL and the preheater 210 is disposed on the supercritical branch line SL1 that branches off from the supercritical line SL connecting the supercritical compressor 260 and the recuperator 240 and joins the supercritical line SL connecting the recuperator 240 and the waste heat recovery device 220.

The compressed carbon dioxide supplied to the waste heat recovery device 220 from the supercritical compressor 260 may be preheated by either the preheater 210 or the recuperator 240, or by regulating the flow rate of compressed carbon dioxide supplied to the preheater 210 and the flow rate of compressed carbon dioxide supplied to the recuperator 240 such that some carbon dioxide can be preheated in the recuperator 240 and supplied to the waste heat recovery device 220 and the remaining carbon dioxide can be preheated in the preheater 210 and supplied to the waste heat recovery device 220.

In the pre-cooler 250, the expanded carbon dioxide delivered from the supercritical turbine 230, or the expanded carbon dioxide that has been expanded in the supercritical turbine 230 and subjected to recovery of residual heat in the recuperator 240, is cooled through heat exchange with a refrigerant before the expanded carbon dioxide is introduced into the supercritical compressor 260.

The temperature of the expanded carbon dioxide after recovery of the residual heat in the recuperator 240 is still high. Thus, for efficient operation of the waste heat recovery unit 200, the pre-cooler 250 may be provided to further cool the expanded carbon dioxide before the expanded carbon dioxide is supplied to the supercritical compressor 260.

The pre-cooler 250 may use seawater or fresh water as a refrigerant to cool the carbon dioxide to around 37°C.

By cooling the expanded carbon dioxide supplied to the supercritical compressor 260 through the pre-cooler 250, it is possible to keep the compressor inlet temperature of the supercritical compressor 260 constant while improving compression efficiency for generating supercritical carbon dioxide.

Referring to FIG. 8, the waste heat recovery unit 200 according to the embodiments of the invention may further include a heat recovery (HR) cooler 270 downstream of the recuperator 240 to further recover residual heat from the expanded carbon dioxide, from which the residual heat has been recovered by the recuperator 240.

The temperature of the expanded carbon dioxide before the expanded carbon dioxide is cooled in the pre-cooler 250 may still be too high for compression in the supercritical compressor 260 to generate supercritical carbon dioxide. Thus, at least one of the pre-cooler 250 and the heat recovery cooler 270 may be provided to further utilize the residual heat of the expanded carbon dioxide expanded in the supercritical turbine 230 before the expanded carbon dioxide is introduced into the supercritical compressor 260.

According to the embodiments of the invention, the residual heat of the expanded carbon dioxide recovered in the heat recovery cooler 270 may be utilized in the ammonia fuel supply unit 100 or the gaseous fuel supply system 700.

### <Method of operation of waste heat recovery unit 200>

When operation of the gas turbine (GT) is stabilized, the waste heat recovery unit 200 is activated and waste heat of the exhaust gas discharged from the gas turbine (GT) can be recovered by the waste heat recovery unit 200.

The temperature of the carbon dioxide from which the residual heat is recovered in the recuperator 240 may still be too high for compression in the supercritical compressor 260 to generate supercritical carbon dioxide. Thus, the heat recovery heater 270 may be disposed downstream of the recuperator 240 to further recover the residual heat of the carbon dioxide recirculated to the supercritical compressor 260, and may be used in a heat source demand where thermal energy is required.

The heat source demand using the residual heat of the carbon dioxide recovered in the heat recovery cooler 270 may be the ammonia vaporizer 150.

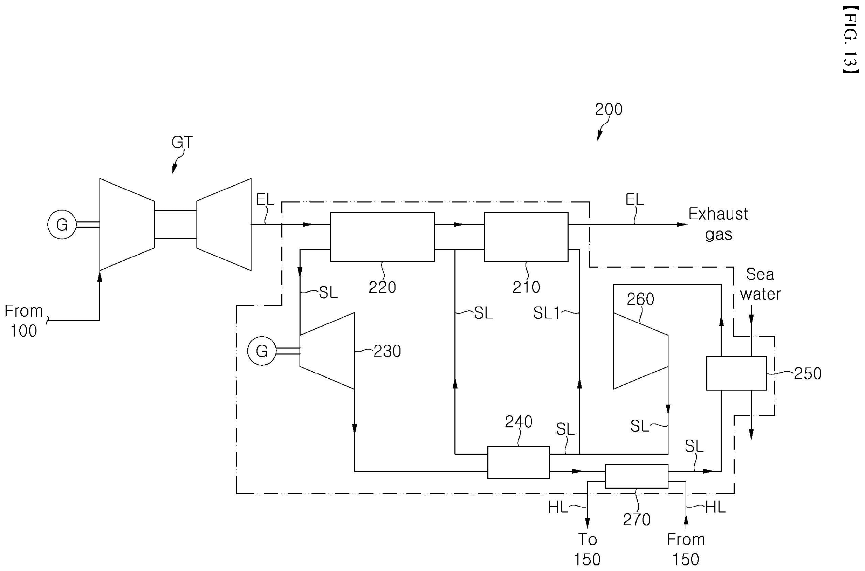

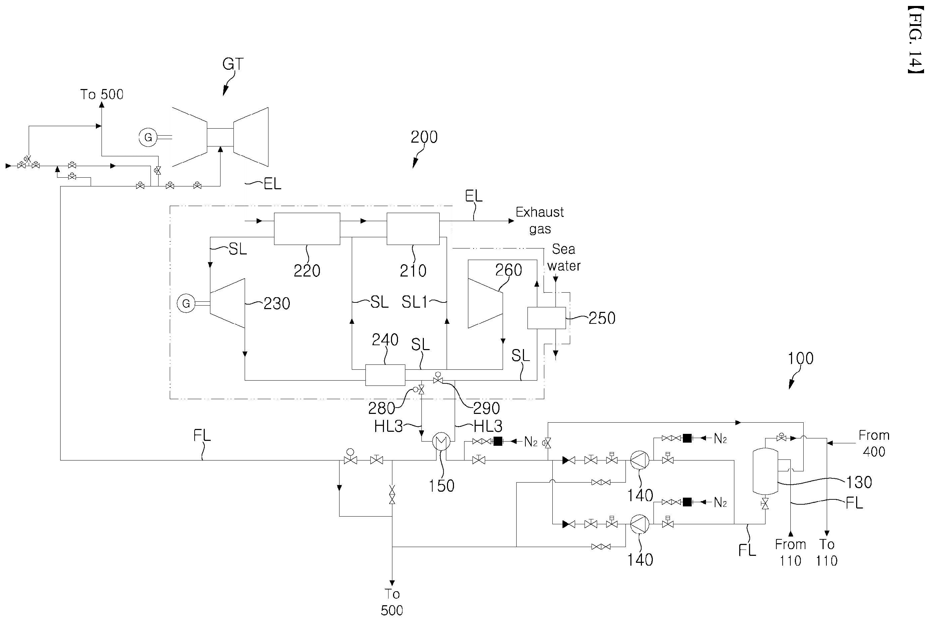

Next, referring to FIG.13 and FIG. 14, embodiments of utilizing the residual heat of the expanded carbon dioxide recovered in the heat recovery cooler 270 in the ammonia fuel supply unit 100 will be described.

First, in one embodiment, referring to FIG. 13, the waste heat recovery unit may further include a heat medium circulation line HL by which the heat recovery cooler 270 and the ammonia vaporizer 150 are connected to each other and through which a heat medium circulates, and the waste heat of the carbon dioxide may be indirectly utilized to vaporize ammonia.

The heat medium is heated through heat exchange with expanded carbon dioxide in the heat recovery cooler 270, and then delivered to the ammonia vaporizer 150 through the heat medium circulation line HL to be cooled through heat exchange with liquid-phase ammonia, and a cycle may be formed in which the heat medium circulates back to the heat recovery cooler 270 through the heat medium circulation line HL.

As the heat medium is used to provide waste heat of the carbon dioxide as a heat source to vaporize ammonia, the carbon dioxide is not in direct contact with the ammonia, thus avoiding possible cross-contamination.

In another embodiment, referring to FIG. 14, the waste heat recovery unit may further include a heat source supply line HL3 that branches off from the supercritical line SL downstream of the recuperator 240 and connects to the ammonia vaporizer 150.

That is, according to the embodiment shown in FIG. 14, the heat recovery cooler 270 described above may be the ammonia vaporizer 150.

Expanded carbon dioxide supplied to the pre-cooler 250 or the supercritical compressor 260 from the supercritical turbine 230 or the recuperator 240 through the supercritical line SL may be supplied to the ammonia vaporizer 150 through the heat source supply line HL3 downstream of the supercritical turbine 230 or the recuperator 240.

In the ammonia vaporizer 150, the carbon dioxide delivered through the heat source supply line HL3 and the liquid-phase ammonia delivered through the ammonia supply line FL are subjected to heat exchange such that the carbon dioxide is cooled and the liquid-phase ammonia is vaporized and heated by the residual heat of the carbon dioxide.

The carbon dioxide cooled after heat exchange in the ammonia vaporizer 150 may be circulated to the supercritical compressor 260 or the pre-cooler 250 through the heat source supply line HL3, which is connected from the ammonia vaporizer 150 to the supercritical line SL upstream of the supercritical compressor 260 or the pre-cooler 250.

According to the embodiment shown in FIG. 14, the waste heat recovery unit 200 may further include at least one of a heat source supply valve 280 provided to the heat source supply line HL3 upstream of the ammonia vaporizer 150, and a heat source branch valve 290 provided to the supercritical line SL downstream of a point from which the heat source supply line HL3 branches off downstream of the recuperator 240, and upstream of a point where the heat source supply line HL3 joins the supercritical line SL.

The heat source supply valve 280 may allow carbon dioxide downstream of the recuperator 240 to be supplied to the ammonia vaporizer 150 via opening/closing control, and may regulate the flow rate of carbon dioxide to the ammonia vaporizer 150 via control of the opening degree.

The heat source branch valve 290 may allow carbon dioxide downstream of the recuperator 240 to be supplied to the pre-cooler 250 or the supercritical compressor 260 instead of being supplied to the ammonia vaporizer 150 via the opening/closing control, and may regulate the flow rate of carbon dioxide via control of the opening degree, in which the carbon dioxide is diverted around the vaporizer 150 and supplied to either the pre-cooler 250 or the supercritical compressor 260.

When the gas turbine (GT) starts up initially and when the load of the gas turbine (GT) is below a certain level, for example, 60%, the gas turbine (GT) may operate in the natural gas fuel mode until operation of the gas turbine (GT) is stabilized.

When the gas turbine (GT) operates in the natural gas fuel mode, the ammonia vaporizer 150 is not activated. Thus, the heat source supply valve 280 may be controlled to close and the heat source branch valve 290 may be controlled to open, thereby allowing the carbon dioxide, from which residual heat is recovered in the recuperator 240, to bypass the ammonia vaporizer 150 to be cooled in the pre-cooler 250.

When the gas turbine (GT) operates in the gaseous ammonia fuel mode, ammonia is supplied to the gas turbine (GT). Thus, the heat source supply valve 280 is controlled to gradually open and the heat source branch valve 290 is controlled to gradually close such that the carbon dioxide is supplied to the ammonia vaporizer 150.

The heat source supply valve 280 and the heat source branch valve 290 may be controlled in cooperation with each other to regulate the flow rate of carbon dioxide to the ammonia vaporizer 150 in order to provide the amount of heat required for the ammonia vaporizer 150.

Since the waste heat of the exhaust gas from the gas turbine (GT) recovered through the waste heat recovery unit 200 is utilized as a heat source for the ammonia vaporizer 150, it is possible to generate additional power while significantly improving efficiency of the gas turbine (GT) through vaporization of the ammonia.

Although the liquid-phase ammonia is compressed to a pressure of about 30 barg to about 40 barg by at least one of the ammonia supply pump 120 and the ammonia boosting pump 140, the temperature of the liquid-phase ammonia is maintained at or slightly above the temperature of the ammonia stored in the ammonia storage tank 110, that is, -30°C to about -35°C.

In other words, since the ammonia vaporizer 150 requires that the liquid-phase ammonia having a temperature of about -30 to -35°C at about 30 barg to about 40 barg be heated to a temperature above the dew point thereof, that is, to about 100°C, a large amount of heat is required to increase the temperature of the ammonia for the ammonia vaporizer 150 to a temperature of about 130°C to 135°C.

By recovering waste heat of the carbon dioxide circulating in the waste heat recovery unit 200 and utilizing the waste as thermal energy to vaporize the liquid-phase ammonia in the ammonia vaporizer 150, it is possible to reduce heating duty of the ammonia fuel supply unit 100.

In addition, since steam or electricity, a typical heat source for vaporizing ammonia, is not required, the amount of fuel required for steam generation can be reduced, thereby reducing operating costs and adverse environmental impacts.

### <Heat source supply unit 300>

The heat source supply unit 300 according to the embodiments of the invention has a function of supplying thermal energy of carbon dioxide or steam circulating in the waste heat recovery unit 200 as a heat source to the ammonia vaporizer 150.

The heat source supply unit 300 may be composed of a cycle of supplying a hot heat medium to the ammonia vaporizer 150 as a heat source to vaporize liquid-phase ammonia, heating the heat medium, which is cooled by vaporizing the liquid-phase ammonia, through heat exchange with steam or carbon dioxide circulating through the waste heat recovery unit 200, and supplying the heat medium to the ammonia vaporizer 150.

In description of the embodiments, the heat medium circulating through the heat source supply unit 300 may be fresh water or technical water.

Since fresh water or technical water is used as the heat medium, the system can be operated safely without the problem of mixing ammonia with carbon dioxide, even if ammonia soluble in water leaks out during heat exchange with ammonia in the ammonia vaporizer 150.

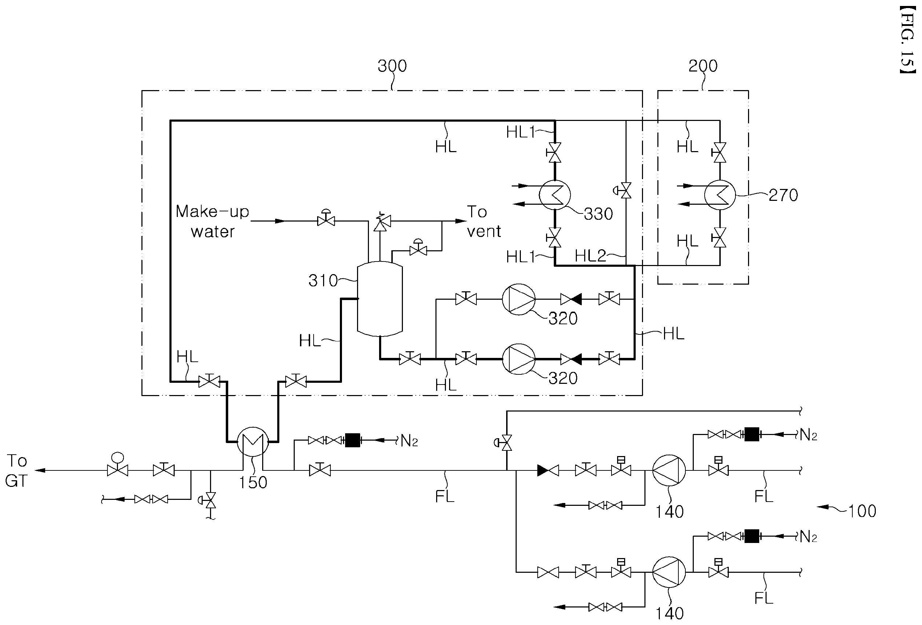

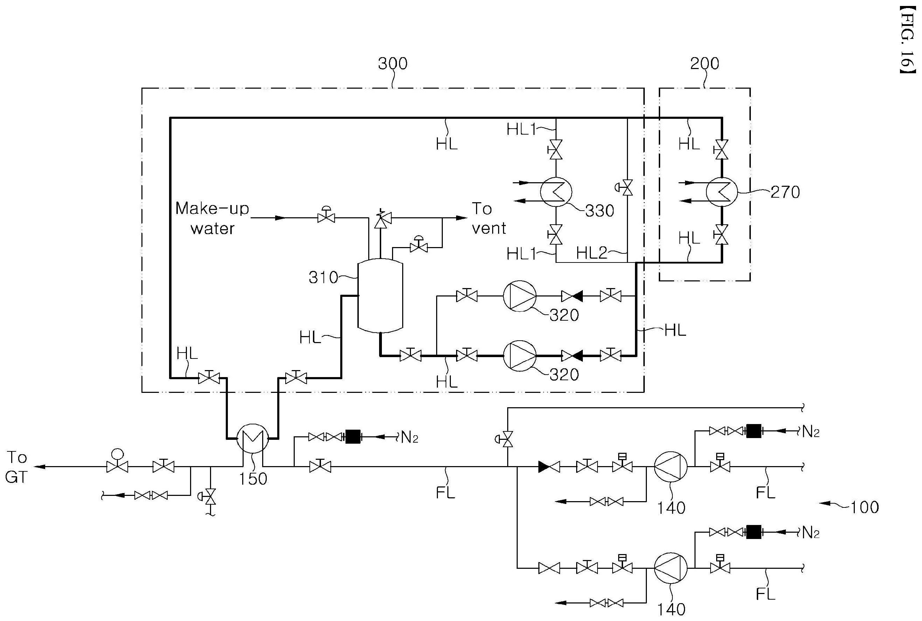

Referring to FIG. 15 and FIG. 16, the heat source supply unit 300 according to the embodiments of the invention may include at least one of a hot water heater (HW heater) 330 that heats a heat medium to be supplied to the ammonia vaporizer 150 through heat exchange with steam to generate a hot heat medium, a heat medium circulation pump (HW circ. pump) 320 that pressurizes the cold heat medium cooled through heat exchange in the ammonia vaporizer 150 and supplies the pressurized heat medium to the heat medium heater 330 or the heat recovery cooler 270, a heat medium tank (HW exp. tank) 310 that receives the cold heat medium discharged from the ammonia vaporizer 150 and supplies the heat medium to the heat medium circulation pump 320, and a heat medium make-up unit (HW make-up water) (not shown) that replenishes the heat medium circulating through the heat source supply unit 300 to the heating fluid tank 310.

The heat medium may be heated through heat exchange with steam in the heat medium heater 330, cooled through heat exchange with liquid-phase ammonia in the ammonia vaporizer 150, introduced into the heat medium circulation pump 320 through the heat medium tank 310, pressurized by the heat medium circulation pump 320, and circulated back to the heat medium heater 330.

The gaseous heat medium heated through heat exchange with steam in the heat medium heater 330 may be vented to the atmosphere from the heat medium tank 310 in which gas-liquid separation occurs, and only the liquid-phase heat medium may be introduced into the heat medium net return pump 320 from the heat medium tank 310.

In the event of excessive increase in temperature during circulation of the heat medium, the temperature can be maintained by supplying make-up water to the heat medium tank 310 through the heat medium make-up unit.

In the embodiments of the invention, the make-up water may be technical water, which typically has a lower temperature than the heat medium circulating through the heat source supply unit 300, and thus can reduce the temperature of the heat medium.

The internal pressure of the heat medium tank 310 may be controlled to a preset pressure using a control valve (not shown) to prevent over-pressurization.

According to the embodiments of the invention, the heat source supply unit may further include a steam heating line HL1 that branches off from the heat medium circulation line HL downstream of the heat medium circulation pump 320, connects to the heat medium heater 330, and joins the heat medium circulation line HL downstream of the heat recovery cooler 270.

That is, depending on whether the waste heat recovery unit 200 is activated or not, the liquid-phase heat medium pressurized by the heat medium circulation pump 320 may be heated by the residual heat of the carbon dioxide in the waste heat recovery unit 200 through the heat medium circulation line HL extending from the downstream of the heat medium circulation pump 320 to upstream of the heat recovery cooler 270, or may bypass the waste heat recovery unit 200 via the steam heating line HL1 diverted to the heat medium heater 330 downstream of the heat medium circulation pump 320 to be supplied to the heat medium heater 330, in which the liquid-phase heat medium is heated by steam to be supplied as a heat source for the ammonia vaporizer 150.

That is, the liquid-phase heat medium pressurized by the heat medium circulation pump 320 may be selectively controlled to be heated through heat exchange with steam in the heat medium heater 330 or through heat exchange with carbon dioxide in the heat recovery cooler 270.

In addition, the liquid-phase heat medium pressurized by the heat medium circulation pump 320 may be utilized by both the heat medium heater 330 and the heat recovery cooler 270 such that some heat medium is supplied to the heat medium heater 330 and the remaining heat medium is supplied to the heat recovery cooler 270 to join each other downstream of the heat medium heater 330 before the heat medium is supplied to the ammonia vaporizer 150.

In addition, as needed, at least some of the liquid-phase heat medium pressurized by the heat medium circulation pump 320 may be introduced into a steam bypass line HL2 configured to bypass both the heat medium heater 330 and the heat recovery cooler 270 without heating.

As described above, the ammonia vaporizer 150 may vaporize liquid-phase ammonia using at least one of thermal energy from carbon dioxide supplied through the waste heat recovery unit 200, thermal energy from steam supplied through the heat source supply unit 300, and thermal energy supplied through the heat source supply unit 300 and the waste heat recovery unit 200.

The ammonia vaporizer 150 may be supplied with heat from the waste heat recovery unit 200 when the waste heat recovery unit 200 is activated, may be supplied with heat from steam when the waste heat recovery unit 200 is not activated, and may be supplied with heat from a combination of thermal energy of the steam and thermal energy of the carbon dioxide if the thermal energy of the carbon dioxide recoverable from the waste heat recovery unit 200 is insufficient even when the waste heat recovery unit 200 is activated.

Referring to FIG. 15, when the waste heat recovery unit 200 is not activated, the liquid-phase heat medium pressurized by the heat medium circulation pump 320 may be supplied to the heat medium heater 330 through the steam heating line HL1, heated through heat exchange with the steam in the heat medium heater 330, and then join the heat medium circulation line HL through the steam heating line HL1 to be supplied to the ammonia vaporizer 150.

Referring to FIG. 16, when the waste heat recovery unit 200 is activated, the liquid-phase heat medium pressurized by the heat medium circulation pump 320 may be supplied to the heat recovery cooler 270 through the heat medium circulation line HL, heated by residual heat of the carbon dioxide in the heat recovery cooler 270, and supplied to the ammonia vaporizer 150 through the heat medium circulation line HL.

### <Gaseous fuel supply system 700>

The gas turbine (GT) according to the embodiments of the invention may use other gaseous fuels besides ammonia as fuel, and the other gaseous fuels according to the embodiments of the present invention may be natural gas.

Accordingly, the ammonia gas turbine fuel supply system of the gas turbine according to the embodiments of the invention may further include a gaseous fuel supply system 700 for supplying natural gas fuel to the gas turbine (GT).

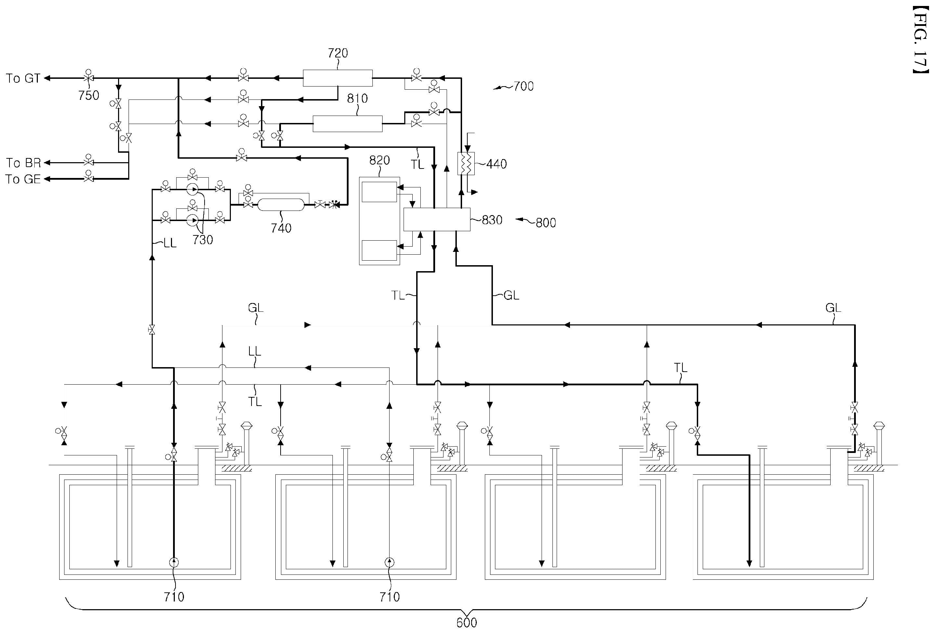

Referring to FIG. 17, the gaseous fuel supply system 700 according to the embodiments of the invention may further include at least one of an LNG storage tank 600 storing natural gas in a liquid phase, i.e., LNG, and a gaseous fuel compressor 720 receiving LNG boil-off gas (BOG) generated through spontaneous vaporization of LNG stored in the LNG storage tank 600 and compressing the LNG boil-off gas to meet the pressure conditions required for the gas turbine (GT).

The LNG boil-off gas generated in the LNG storage tank 600 may be supplied to the combustion chamber of the gas turbine (GT) via a gaseous fuel supply line GL connecting the LNG storage tank 600 to the gas turbine (GT).

The gaseous fuel supply line GL between the gaseous fuel compressor 720 and the gas turbine (GT) may be provided with a gaseous fuel master supply valve 750 that allows or shuts off supply of LNG boil-off gas from the gaseous fuel compressor 720 to the gas turbine (GT).

On the other hand, the gaseous fuel supply line GL may be provided with two gaseous fuel supply lines in parallel such that when one line is unavailable for some reason, the other line may be used to supply gaseous fuel to the gas turbine (GT) or the generator engine (GE), thereby enabling power propulsion without any problems.

Since the gas turbine (GT) requires natural gas as fuel for startup and natural gas offers a broader range of operation than ammonia, it is desirable to install a spare gaseous fuel supply line GL to ensure operational flexibility of natural gas.

The gaseous fuel supply line GL may also be provided with double block and bleed valves AGf (see FIG. 21) to shut off supply of the natural gas fuel to the gas turbine (GT) or the generator engine (GE) when the gaseous fuel mode is interrupted, to ensure safety in accordance with the international and classification regulations. One set of double block and bleed valves AGf may be disposed for each gaseous fuel supply line GL1, GL2, as shown in FIG. 21 and FIG. 22.

The double block and bleed valve (AGf) consists of two double block valves arranged in series to isolate the front and rear ends from each other, and a bleed valve between the double block valves for natural venting of a fluid between the double block valves.

Further, the gaseous fuel supply line GL may be provided with gaseous fuel flow regulation valves FVf (see FIG. 21) that regulate the flow rate of natural gas supplied to the gas turbine (GT) from the gaseous fuel supply system 700 such that a suitable amount of natural gas can be supplied to the gas turbine (GT). One set of gaseous fuel flow regulation valves may be provided per gaseous fuel supply line GL.

The LNG storage tank 600 may be a fuel tank for storing LNG as fuel. In addition, when the ammonia gas turbine fuel supply system according to the embodiments of the invention is applied to an LNG carrier, the LNG storage tank 600 may be one or more cargo tanks, which store LNG as cargo.

Referring to FIG. 17, for example, four cargo tanks are shown as LNG storage tanks 600.

LNG boil-off gas compressed in the gaseous fuel compressor 720 may be supplied to the combustion chamber as fuel for the gas turbine (GT). The pressure conditions of natural gas required for the gas turbine (GT) may be the same as the pressure conditions of gaseous ammonia.

The gaseous fuel compressor 720 may be arranged as a multistage compressor and the number of stages of the multistage compressor may vary depending on the fuel supply pressure required for a natural gas consumption site, such as a gas turbine and the like.

In some embodiments, the multistage compressor is a three-stage compressor by way of example. Natural gas compressed in the third stage may be compressed to a fuel supply pressure required for the gas turbine (GT), that is, a pressure of about 30 bar to 40 bar or a pressure of about 36 barg in this embodiment. The natural gas having undergone three stages of compression is discharged at a pressure required for the gas turbine (GT) and supplied to the gas turbine (GT) through the gaseous fuel master supply valve 750.

The natural gas fuel required for the gas turbine (GT) may have a temperature of about 30°C to 40°C, or about 43°C to about 45°C.

In one example, the boil-off gas compressed to about 36 barg in the gaseous fuel compressor 720 has a temperature of about 45°C.

The temperature of the LNG boil-off gas increases during compression in the gaseous fuel compressor 720 and the LNG boil-off gas is discharged from the gaseous fuel compressor 720 to be introduced into the gas turbine (GT) at a temperature of about 30°C to about 40°C.

Conversely, the natural gas compressed in the second stage can meet the fuel supply pressure required for the generator engine (GE) and an auxiliary boiler BR, which has a relatively low fuel supply pressure.

The gaseous fuel compressor 720 may serve to keep an absolute pressure in the LNG storage tank 600 constant or within a preset range.

When the absolute pressure of the LNG storage tank 600 increases or attempts to reach above the preset value, the LNG boil-off gas may be discharged from the LNG storage tank 600 through the gaseous fuel supply line GL, and the discharged LNG boil-off gas may be supplied to the gaseous fuel compressor 720. The boil-off gas compressed in the gaseous fuel compressor 720 may be supplied to at least one of the gas turbine (GT), the generator engine (GE), and the boiler BR.

When the gas turbine (GT) stops or operates in the ammonia fuel mode, the gaseous fuel compressor 720 may not be activated, whereas the natural gas compressor 720 may be activated to compress the LNG boil-off gas, supplying the LNG boil-off gas as fuel for the generator engine (GE) and the boiler BR in consideration of energy efficiency.

Accordingly, the gaseous fuel supply system 700 may further include a pressure reducer (not shown) that reduces the pressure of the LNG boil-off gas compressed by the gaseous fuel compressor 720 to the fuel pressure required for the generator engine (GE) and the boiler (BR).

The natural gas depressurized by the pressure reducer may be supplied as fuel for the generator engine (GE) or the boiler (BR).

The gaseous fuel supply system 700 according to some embodiments of the invention may further include a cold heat recovery unit 440 that recovers cold heat from the LNG boil-off gas supplied from the LNG storage tank 600 to the gaseous fuel compressor 720 to cool ammonia.

The ammonia cooled through heat exchange with the LNG boil-off gas in the cold heat recovery unit 440 may be returned to the ammonia storage tank 110 to maintain the ammonia storage tank 110 at a low temperature.

When the reliquefaction system 800 described below is activated, LNG boil-off gas supplied to the gaseous fuel compressor 720 from the LNG storage tank 600 may be supplied to the gaseous fuel compressor 720 after cold heat is recovered in the reliquefaction system 800.

The cold heat of the LNG boil-off gas recovered in the reliquefaction system 800 may be used as cold heat for condensing the LNG boil-off gas to be reliquefied.

When the reliquefaction system 800 is not activated, the LNG boil-off gas supplied to the gaseous fuel compressor 720 from the LNG storage tank 600 may bypass the reliquefaction system 800 to be supplied into the gaseous fuel compressor 720, with or without passing through the cold heat recovery unit 440.

The gaseous fuel supply system 700 according to some embodiments of the invention may further include a fuel boosting pump 730 that receives LNG from the LNG storage tank 600 and compresses LNG to meet the pressure conditions required for the gas turbine (GT), and a fuel vaporizer 740 that vaporizes the compressed LNG to generate natural gas that meets the pressure conditions required for the gas turbine (GT).

When the amount of LNG boil-off gas generated in the LNG storage tank 600 is less than the flow rate of natural gas required for the gas turbine (GT) or the generator engine (GE) and the boiler (BR), the fuel boosting pump 730 and the fuel vaporizer 740 may be used to generate forcible vaporization gas to be supplied as gaseous fuel.

The LNG storage tank 600 may be provided with an LNG supply pump 710 to discharge liquid-phase LNG stored in the LNG storage tank 600 to the outside of the LNG storage tank 600.

If two or more LNG storage tanks 600 are provided as cargo tanks, the LNG supply pump 710 may be provided to only some of the two or more LNG storage tanks 600.

For example, when the ship according to this embodiment is provided with four LNG storage tanks 600 as cargo tanks, the LNG supply pump 710 may be provided to LNG storage tank 3 and LNG storage tank 4, which are located on the stern side.

The fuel boosting pump 730 may pressurize LNG delivered by the LNG supply pump 710 to 30 barg to 40 barg, or about 36 barg.

The fuel vaporizer 740 may vaporize the LNG pressurized by the fuel boosting pump 730 to 20°C to 30°C, or about 25°C.

The forcible vaporization gas produced by the fuel vaporizer 740 may be supplied as fuel to the gas turbine (GT) and may also be supplied to the fuel the generator engine (GE) and the boiler (BR) through a pressure reducer.

When the amount of LNG boil-off gas generated in the LNG storage tank 600 is equal to or greater than the amount of gaseous fuel required for the gas turbine (GT), the generator engine (GE), and the boiler (BR), the LNG boil-off gas may be compressed in the gaseous fuel compressor 720 and may be supplied as fuel to at least one of the gas turbine (GT), the generator engine (GE), and the boiler (BR) after cold heat is recovered from at least one of the cold heat recovery unit 440 and the reliquefier 830 through the gaseous fuel supply line GL.

When the amount of LNG boil-off gas generated in the LNG storage tank 600 is less than the amount of gaseous fuel required for the gas turbine (GT), the generator engine (GE), and the boiler (BR), LNG pressurized by the LNG supply pump 710 is supplied to the fuel boosting pump 730 through the forcible vaporization line LL, and forcible vaporization gas generated by vaporizing the LNG compressed in the fuel boosting pump 730 in the fuel vaporizer 740 may be supplied as fuel to at least one of the gas turbine (GT), the generator engine (GE), and the boiler (BR).

### <Method of supplying heat source to fuel vaporizer 740>

Heat for vaporizing LNG in the fuel vaporizer 740 according to some embodiments of the invention may be supplied from the heat source supply unit 300 or the waste heat recovery unit 200.

In the following embodiments, the fuel vaporizer 740 may be a heat demand site that uses residual heat from carbon dioxide recovered from the heat recovery cooler 270 of the waste heat recovery unit 200 described above.

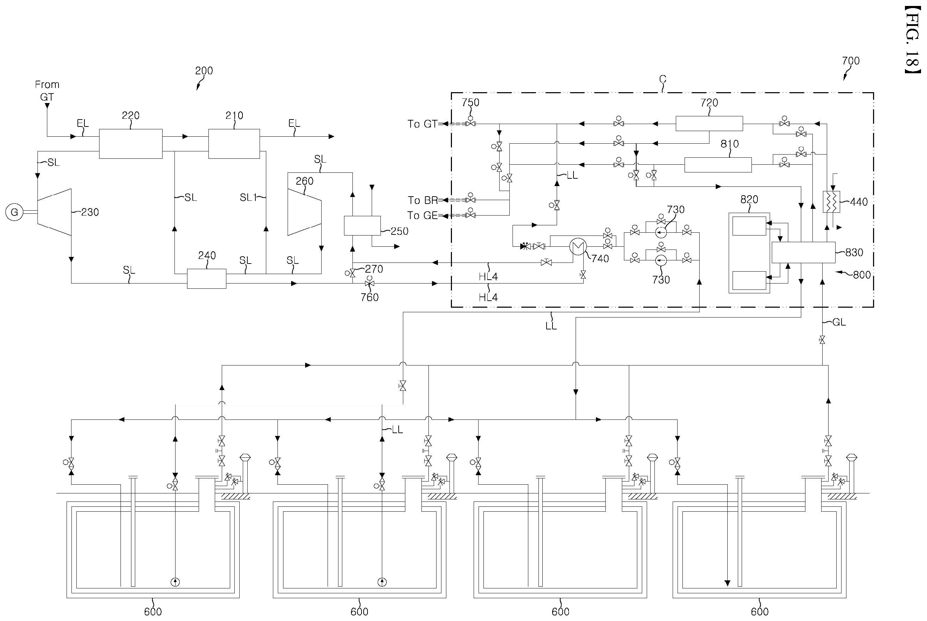

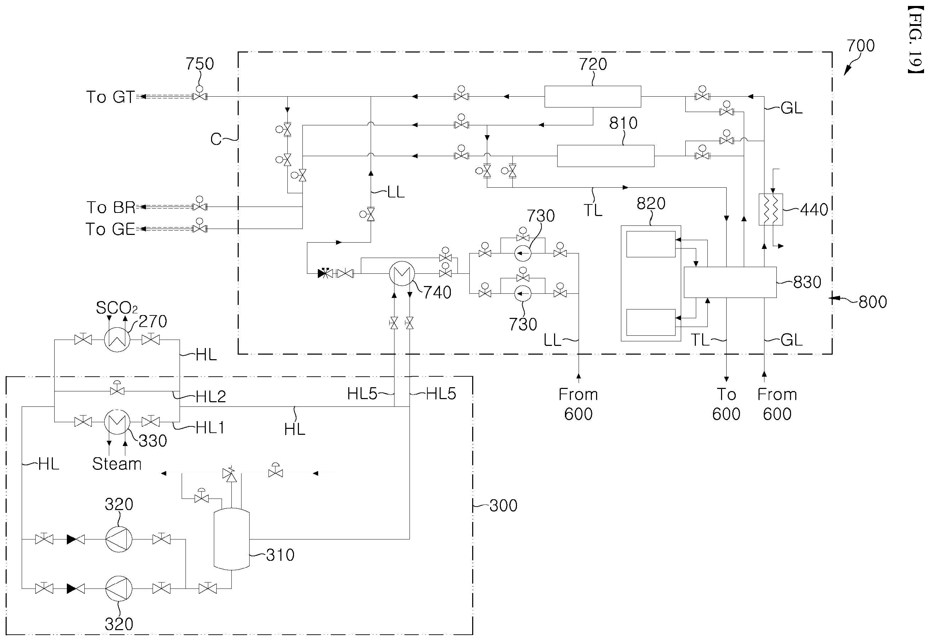

Referring to FIG. 18 and FIG. 19, an embodiment in which heat is supplied to the fuel vaporizer 740 of the gaseous fuel supply system 700 will be described.

In order to improve efficiency of ship operation and control an internal pressure of the LNG storage tank 600, it is preferred to supply LNG BOG generated through spontaneous vaporization within the LNG storage tank 600 as fuel for the gas turbine (GT) or the generator engine (GE). However, when there is a shortage of gaseous fuel, LNG stored in the LNG storage tank 600 may be vaporized and used as fuel.

To vaporize the LNG, a fuel vaporizer 740 may be used and it is necessary to supply heat for vaporizing LNG to the fuel vaporizer 740.

First, by way of example, referring to FIG. 18, the gaseous fuel supply system 700 according to this embodiment may further include a vaporization heat source line HL4 that branches off from the supercritical line SL between the recuperator 240 and the pre-cooler 250 of the waste heat recovery unit 200 and connects to the fuel vaporizer 740.

Expanded carbon dioxide supplied to the pre-cooler 250 or supercritical compressor 260 from the supercritical turbine 230 or the recuperator 240 through the supercritical line SL may be supplied to the fuel vaporizer 740 along the vaporization heat source line HL4 downstream of the supercritical turbine 230 or the recuperator 240.

In the fuel vaporizer 740, the carbon dioxide delivered through the vaporization heat source line HL4 and the LNG delivered through the forcible vaporization line LL undergo heat exchange such that the carbon dioxide is cooled and the LNG is vaporized and heated by the residual heat of the carbon dioxide.

After heat exchange in the fuel vaporizer 740, the cooled carbon dioxide may be circulated to the supercritical compressor 260 or the pre-cooler 250 through the vaporization heat source line HL4, which extends from the fuel vaporizer 740 to the supercritical line SL upstream of the supercritical compressor 260 or the pre-cooler 250.

In other words, according to the embodiment shown in FIG. 18, the heat recovery cooler 270 described above may be the fuel vaporizer 740.

The vaporization heat source line HL4 may further include at least one of a vaporization heat source valve 760 disposed upstream of the fuel vaporizer 740 and a heat source branch valve 290 disposed on the supercritical line SL at a point downstream of the recuperator 240, where the vaporization heat source line HL4 branches off, and upstream of a point where the vaporization heat source line HL4 joins the supercritical line SL.

The vaporization heat source valve 760 may allow carbon dioxide downstream of the recuperator 240 to be supplied to the fuel vaporizer 740 via opening/closing control and may regulate the flow rate of carbon dioxide supplied to the fuel vaporizer 740 via control of the opening degree.

The heat source branch valve 290 may allow carbon dioxide downstream of the recuperator 240 to be supplied to the pre-cooler 250 or the supercritical compressor 260 instead of being supplied to the fuel vaporizer 740 via the opening/closing control, and may regulate the flow rate of carbon dioxide via control of the opening degree, in which the carbon dioxide is diverted around the fuel vaporizer 740 and supplied to either the pre-cooler 250 or the supercritical compressor 260.

When the gas turbine (GT) starts up initially and when the load of the gas turbine (GT) is below a certain level, for example, 60%, the gas turbine (GT) may operate in the natural gas fuel mode until operation of the gas turbine (GT) is stabilized. In this case, since all of the natural gas supplied to fuel the gas turbine (GT) can be used as LNG boil-off gas, operation of the fuel vaporizer 740 is not required.

When the fuel vaporizer 740 is not activated, the vaporization heat source valve 760 is closed and the heat source branch valve 290 is opened such that the carbon dioxide, having undergone recovery of residual heat in the recuperator 240, bypasses the fuel vaporizer 740 and undergoes cooling in the pre-cooler 250.

When the fuel vaporizer 740 is not used, the pre-cooler 250 may be selected with a capacity sufficient to cool all of a calorific value of carbon dioxide in a state that no additional residual heat is recovered after waste heat is recovered in the recuperator 240.

On the other hand, when the gas turbine (GT) operates in a mode that uses only natural gas as fuel while the gas turbine (GT) operate in the maximum load, such as in a high-speed section, LNG boil-off gas alone is not sufficient and forcible vaporization gas must be supplied as fuel. Thus, the fuel vaporizer 740 must be activated at this time.

When the fuel vaporizer 740 is changed to a mode that requires operation of the fuel vaporizer 740, the vaporization heat source valve 760 is controlled to gradually open and the heat source branch valve 290 is controlled to gradually close such that the carbon dioxide is supplied to the fuel vaporizer 740.

In addition, when the fuel vaporizer 740 is changed to a non-operational mode, the vaporization heat source valve 760 is controlled to gradually close and the heat source branch valve 290 is controlled to gradually open such that carbon dioxide bypasses the fuel vaporizer 740 and undergoes cooling in the pre-cooler 250.

The vaporization heat source valve 760 and the heat source branch valve 290 may be controlled in cooperation with each other to regulate the flow rate of carbon dioxide to the fuel vaporizer 740 in order to provide the amount of heat required for the fuel vaporizer 740.

According to this embodiment, the waste heat recovered by the waste heat recovery unit 200 is utilized to vaporize and heat LNG, thereby eliminating the need for an additional heat source, such as steam. Thus, it is possible to reduce the fuel required to generate steam, thereby reducing operating costs and environmental impacts.

In another embodiment, referring to FIG. 19, the gaseous fuel supply system 700 according to this embodiment may further include a heat medium vaporization line HL5 that branches off from the heat medium circulation line HL and connects to a fuel vaporizer 740.

According to this embodiment, a cycle may be formed in which the heat medium is heated in at least one of the heat recovery cooler 270 and the heat medium heater 330, supplied to the fuel vaporizer 740 through the heat medium vaporization line HL5, cooled through heat exchange with LNG in the fuel vaporizer 740, and rejoins the heat medium circulation line HL at a point upstream of the heat medium tank 310 through the heat medium vaporization line HL5.

When the fuel vaporizer 740 requires heat supply while the waste heat recovery unit 200 is activated, the heat medium discharged from the heat medium tank 310 by the heat medium circulation pump 320 may be supplied to the heat recovery cooler 270 through the heat medium circulation line HL, heated by the waste heat of the carbon dioxide in the heat recovery cooler 270, and then supplied to the fuel vaporizer 740 through the heat medium vaporization line HL5. The heat medium cooled through vaporization of LNG in the fuel vaporizer 740 is recirculated back to the heat medium tank 310.

When the fuel vaporizer 740 requires heat supply while the waste heat recovery unit 200 is not activated, the heat medium discharged from the heat medium tank 310 by the heat medium circulation pump 320 may be supplied to the heat medium heater 330 through the steam heating line HL1, heated through heat exchange with the steam in the heat medium heater 330, and then supplied to the fuel vaporizer 740 through the heat medium vaporization line HL5. The heat medium cooled through vaporization of LNG in the fuel vaporizer 740 is recirculated back to the heat medium tank 310.

As such, as the heat medium heated by at least one of waste heat of carbon dioxide and steam is used to vaporize LNG, the heat medium is not in direct contact with the LNG even though the waste heat of the carbon dioxide is utilized, thus avoiding possible cross-contamination.

In addition, since the waste heat from the waste heat recovery unit 200 is used as a heat source in addition to steam conventionally used as a heat source for vaporizing LNG, the amount of steam used can be reduced, thereby reducing energy and OPEX for vaporization of LNG.

### <Reliquefaction system 800>

Referring again to FIG. 17, the ammonia gas turbine fuel supply system according to the embodiments of the invention may further include a reliquefaction system 800 for reliquefying LNG boil-off gas generated through spontaneous vaporization of LNG stored in the LNG storage tank 600 and returning the boil-off gas to the LNG storage tank 600.

When the engines of this embodiment, i.e., the gas turbine (GT), the generator engine (GE), and the boiler (BR), operate in the natural gas fuel mode, LNG boil-off gas, which is spontaneous vaporized natural gas in the LNG storage tank 600, may be supplied as fuel.

When the amount of LNG boil-off gas discharged from the LNG storage tank 600 is greater than the flow rate of natural gas required for the gas turbine (GT) or the generator engine (GE) and the boiler (BR), the LNG boil-off gas may be reliquefied and returned to the LNG storage tank 600 by the reliquefaction system 800 to prevent an excessive pressure increase in the LNG storage tank 600.

The reliquefaction system 800 may be designed to have a capacity capable of reliquefying all of the LNG boil-off gas discharged from the LNG storage tank 600.

When the reliquefaction system 800 is activated, the LNG boil-off gas discharged from the LNG storage tank 600 may be introduced into the boil-off gas compressor 810 after recovery of cold heat in the reliquefier 830 such that the cold heat from recovered from the LNG boil-off gas may be used to reliquefy the LNG boil-off gas.

On the other hand, when the amount of LNG boil-off gas discharged from the LNG storage tank 600 is equal to or less than the amount of natural gas required for the gas turbine (GT), the generator engine (GE), and the boiler (BR), the reliquefaction system 800 is not activated. Thus, the LNG boil-off gas bypasses the reliquefaction system 800 and is supplied to the gaseous fuel compressor 720, in which the LNG boil-off gas is compressed to meet the pressure conditions required for the engines.

The reliquefaction system 800 may include at least one of a boil-off gas compressor 810 compressing the boil-off gas to be reliquefied, and a reliquefier 830 condensing the boil-off gas compressed in the boil-off gas compressor 810.

The boil-off gas compressor 810 may be used for the same functions as the gaseous fuel compressor 720, such as pressure regulation in the LNG storage tank 600, except that the boil-off gas compressor 810 compresses LNG boil-off gas and supplies it as fuel to at least one of the gas turbine (GT), the generator engine (GE), and the boiler (BR).

The boil-off gas compressor 810 may compress the LNG boil-off gas to a pressure required for the generator engine (GE) and the boiler (BR), for example, a pressure of about 10 barg to 20 barg, or about 13 barg.

The boil-off gas compressed to about 13 barg in the boil-off gas compressor 810 may have a temperature of about 45°C.

Further, the boil-off gas compressor 810 may be used to supply LNG boil-off gas to the reliquefier 830 when the gaseous fuel compressor 720 is unavailable, when the gas turbine (GT) does not operate in the natural gas fuel mode, or when there is no natural gas consumption.

Furthermore, the reliquefier 830 may further include a refrigerant circulator 820 that circulates refrigerant to condense the compressed boil-off gas.

The refrigerant circulating through the refrigerant circulator 820 and the reliquefier 830 in this embodiment may be liquid nitrogen.

When the gas turbine (GT), the generator engine (GE), and the boiler (BR) do not operate in the natural gas fuel mode, the remaining LNG boil-off gas in excess of the required amount of gaseous fuel is supplied to the boil-off gas compressor 810 to be compressed thereby upstream of the gaseous fuel compressor 720, and is condensed in the reliquefier 830 by at least one of cold heat of the boil-off gas prior to compression and cold heat of the refrigerant circulating through the refrigerant circulator 820. The condensed reliquefied boil-off gas may be returned to the LNG storage tank 600 through a reliquefaction return line TL.

The reliquefier 830 may also recover cold heat from the cryogenic LNG boil-off gas supplied to the gas-fuel compressor 720 or the boil-off gas compressor 810 and may use the cold heat to reliquefy the compressed boil-off gas.

That is, as cold heat is recovered in the reliquefier 830, the LNG boil-off gas supplied from the LNG storage tank 600 to the gaseous fuel compressor 720 or the boil-off gas compressor 810 may be heated and then introduced into the gaseous fuel compressor 720 or the boil-off gas compressor 810.

When both the cold heat recovery unit 440 and the reliquefier 830 are provided, the LNG boil-off gas supplied from the LNG storage tank 600 to the gaseous fuel compressor 720 or the boil-off gas compressor 810 may be supplied to the gaseous fuel compressor 720 or the boil-off gas compressor 810 after primary recovery of cold heat through heat exchange with the LNG boil-off gas to be liquefied in the liquefaction unit 830 and secondary recovery of cold heat through heat exchange with ammonia to be cooled in the cold heat recovery unit 440.

In LNG carriers, the gaseous fuel compressor 720 serves to regulate the pressure in the LNG storage tank and supply gaseous fuel. The gaseous fuel compressor 720 may be used to supply LNG boil-off gas to the gas turbine (GT), the generator engine (GE), and the reliquefaction system 800.

In accordance with the classification and international regulations, one spare compressor with the same specifications as the gaseous fuel compressor is employed to serve as a backup for the gaseous fuel compressor 720.

In other words, both the gaseous fuel compressor 720 and the boil-off gas compressor 810 are configured in redundant pairs. Specifically, when one compressor is activated, at least one compressor remains in standby to become available in the event of an outage of the operating compressor. However, the gaseous fuel compressors 720 require large CAPEX, which has often impacted ship costs.

According to the embodiments of the invention, the gaseous fuel compressor 720 compresses LNG boil-off gas to a pressure required for the gas turbine (GT), for example, a pressure of about 30 bar to 40 bar, and is capable of compressing the LNG boil-off gas to a pressure of 13 bar for supply to the generator engine (GE), the boiler (BR), and the reliquefier 830.

Although the boil-off gas compressor 810 has the same capacity as the gaseous fuel compressor 720, the boil-off gas compressor 810 has an output pressure of 13 bar and is capable of supplying LNG boil-off gas to the generator engine (GE), the boiler (BR), and the liquefier 830.

Referring to FIG. 20, to solve the problems described above, the reliquefaction system according to this embodiment may have one gaseous fuel compressor 720 and one boil-off gas compressor 810, both configured to provide mutual redundancy for each other.

Since the gaseous fuel compressor 720 is activated in a mode that supplies natural gas as fuel to the gas turbine (GT) or the generator engine (GE), and the boil-off gas compressor 810 is activated in a mode that supplies natural gas as fuel to the generator engine (GE) or the reliquefier 830, the gaseous fuel compressor 720 and the boil-off gas compressor 810 can be configured to provide mutual redundancy for each other.

That is, instead of having a spare gaseous fuel compressor 720 with the same specifications, the boil-off gas compressor 810 may be used to process LNG boil-off gas in an outage of the gaseous fuel compressor 720.

In this embodiment, the boil-off gas compressor 810 may be activated not only to liquefy the LNG boil-off gas, but also in the event of a failure of the gaseous fuel compressor 720, whereby the LNG boil-off gas can be supplied as fuel to the gas turbine (GT), the generator engine (GE), or the boiler (BR), and can also be supplied to the reliquefier 830 to reduce the pressure in the LNG storage tank 600 through reliquefaction of the LNG boil-off gas.

When the gaseous fuel compressor 720 is unavailable, the LNG boil-off gas cannot be supplied as fuel to the gas turbine (GT). In this case, the LNG boil-off gas is supplied as fuel to the generator engine (GE) or the boiler (BR) using the boil-off gas compressor 810.

When the amount of LNG boil-off gas is greater than the fuel consumption, the LNG boil-off gas compressed in the boil-off gas compressor 810 is sent to the reliquefier 830 for reliquefaction.

On the other hand, even when the gaseous fuel compressor 720 is available and the gas turbine (GT) does not operate in a mode using the LNG boil-off gas as fuel, the LNG boil-off gas is compressed by the boil-off gas compressor 810 and supplied to the generator engine (GE), the boiler (BR), or the reliquefier (830) in the same way as when the gaseous fuel compressor 720 is not available, considering energy efficiency.

### <Generator Engine (GE) and Boiler (BR)>

The engines of the ammonia gas turbine fuel supply system according to the embodiments of the invention may further include at least one of the generator engine (GE), which is an internal combustion engine that generates power using LNG as fuel, and the boiler (BR), which generates steam using LNG as fuel.

The generator engine (GE) may be provided for the purpose of supplementing power output of the gas turbine (GT) when the power output is insufficient to meet the power requirements of on-board power demand sites, such as a propulsion motor, and to cope with situations where the gas turbine (GT) cannot operate.

For example, during navigation of the ship, the gas turbine (GT) is mainly used to generate power for propulsion and power for on-board power demand sites, and when the ship is navigating at low speed or at anchor, the amount of power required for propulsion and the on-board power demand sites is not large, and thus the generator engine (GE) may be used to generate power rather than operating the gas turbine (GT) due to low load.

In addition, when the ship is navigating at high speed, the gas turbine (GT) alone can be insufficient to generate power for propulsion, and the gas turbine (GT) and the generator engine (GE) may be used together to generate the power for propulsion and the on-board power demand sites.

In this case, a power management system (not shown) may be provided to manage the power generated by the gas turbine (GT) and the generator engine (GE), and to distribute and supply the power to the propulsion system and the on-board power demand sites.

The generator engine (GE) according to the embodiments of the invention may be a dual fuel diesel generator (DFDG) that can utilize natural gas and fuel oil, either alone or in combination, as fuel.

The generator engine (GE) may also be used to treat LNG boil-off gas.

The gaseous fuel supply line GL may be provided with a gaseous fuel master supply valve (not shown) for the generator engine to supply or shut off natural gas to the generator engine (GE).

The boiler (BR) according to the embodiments may be a dual-fuel boiler that can utilize natural gas and fuel oil, either alone or in combination, as fuel.

The boiler (BR) may also have a function of generating steam to be supplied to a steam demand site, and a function of operating in GCU mode to combust and process LNG boil-off gas when the LNG boil-off gas cannot be supplied to the gas turbine (GT) or the generator engine (GE) or cannot be liquefied even in the reliquefaction system 800.

Depending on the capacity of the boiler (BR), the LNG boil-off gas may be entirely treated in the boiler or may be partially treated in the boiler (BR) by operating together with the gas turbine (GT) and the generator engine (GE).

When the boiler (BR) operates in GCU mode, the ammonia gas turbine fuel supply system may be further provided with a steam condensing system for condensing excess steam generated by using the LNG boil-off gas as fuel in the boiler (BR).

On the other hand, the gaseous fuel supply line GL may be provided with a gaseous fuel master supply valve (not shown) for the boiler to supply or shut off the natural gas supplied to the boiler (BR).

In this embodiment, low sulfur marine gas oil (LSMGO) may be used as fuel oil. Although not shown in the drawings, when the ammonia gas turbine fuel supply system according to this embodiment is applied to an LNG carrier, the ship according to this embodiment may further include a fuel oil supply system (not shown) for supplying fuel oil as fuel for the generator engine (GE) and the boiler (BR). The fuel oil supply system may be selected from any of those well-known in the art.

When the gas turbine (GT) is not operable, the generator engine (GE) may be activated to generate electricity for use. In addition, when the ship is at anchor (including loading and unloading), the dual fuel generator engine (GE) may be used to generate and supply power, since a large amount of power is not required.

In this embodiment, two generator engines (GEs) will be described by way of example.

In general, when there is no cargo, one generator engine may be operated to supply power to the on-board power demand sites.

However, when the ship is at anchor with cargo, a large amount of LNG boil-off gas is generated and the reliquefaction system 800 is activated to regulate the amount of LNG boil-off gas, thereby increasing the amount of power required. In preparation for this situation, the two generator engines (GE) may be designed to handle this amount of power.

During loading and unloading, electric heaters are typically activated to generate steam for the on-board steam demand sites. However, if a large amount of steam is required, the boiler (BR) may be activated to generate steam.

Since the presence or absence of cargo changes the amount of LNG boil-off gas generated in the LNG storage tank 600, which in turn changes the amount of power required for the reliquefaction system 800, the operating load (speed) of the engines that generate power in this embodiment, that is, the gas turbine (GT) and the generator engine (GE), may be varied.

According to some embodiments of the invention, the ammonia gas turbine fuel supply system may further include an economizer (not shown) that recovers waste heat from exhaust gas discharged from the generator engine (GE) to generate steam.

When the generator engine (GE) is operated in high speed, low speed, and anchoring states, steam is generated by the economizer for the generator connected to the generator engine (GE).

A steam heating line (not shown) may be provided to make the steam generated by the economizer available to an on-board steam demand site. The on-board steam demand site may include the heat source supply unit 300 described above.

Steam may be generated by the economizer using waste heat from exhaust gas of the generator engine (GE) and then may serve as an on-board heat source for heating, for example, water in the heat medium heater 330.

### <Arrangement>

Hereinafter, with reference to FIG. 21 to FIG. 24, an arrangement of a ship with the ammonia gas turbine fuel supply system according to the embodiments of the invention will be described.

The ship according to the embodiments of the invention may use all of LNG boil-off gas generated in an on-board LNG storage tank (cargo hold) as fuel, even when a mixture of ammonia and natural gas is used, thereby improving fuel efficiency.

In addition, even when natural gas is used as fuel, the amount of methane discharged without combustion can be dramatically reduced compared to typical engines which discharge the least amount of methane.

Furthermore, when a gas turbine (GT) having a smaller size than a conventional diesel engine is used as a main propulsion engine of the ship, the ammonia storage tank 110 and the ammonia fuel supply unit 100 can be arranged without changing the length of the ship.

The ship according to the embodiments of the present invention may be divided into a stern area A, an engine room E, an ammonia storage tank 110, an ammonia fuel preparation room P, an LNG storage tank (cargo tank) 600, a cargo compressor room C, a cabin area Q, a bow area F, and the like.

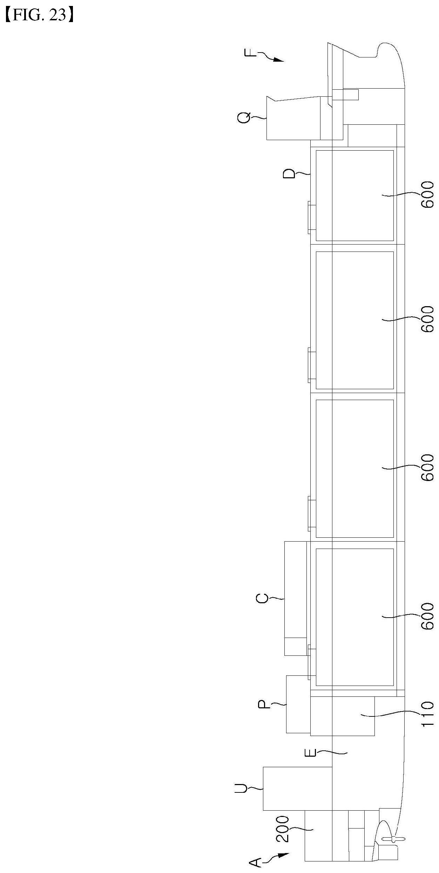

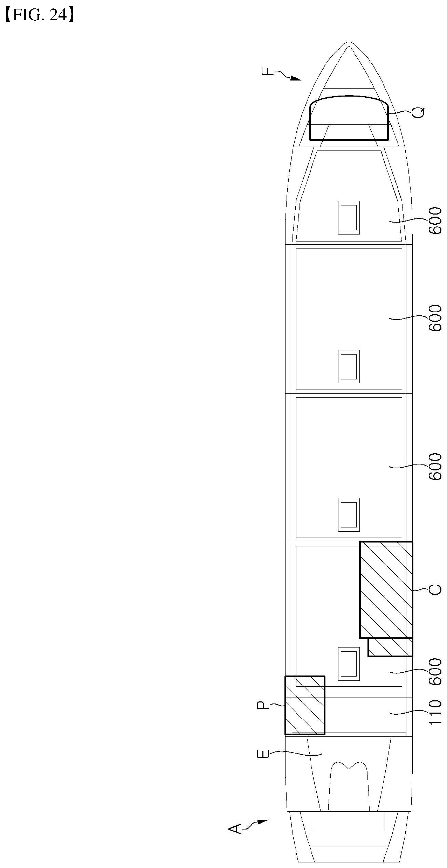

Referring to FIG. 23 and FIG. 24, the ammonia fuel supply unit 100 is disposed in the ammonia fuel preparation room P, which may be disposed on the outer deck D.

The gaseous fuel supply system 700 is disposed in the cargo compressor room C, which may be disposed opposite the ammonia fuel preparation room P on the outer deck D. For example, when the ammonia fuel preparation room P is disposed on the starboard side, the cargo compressor room C may be disposed on the port side.

The gas turbine (GT), the generator engine (GE), and the boiler (BR) may be disposed in the engine room (E).

On the other hand, as an electric propulsion system for ammonia gas turbines is used, the ammonia storage tank 110 may be disposed in the engine room E, which can reduce the area of the engine room R. Further, as the ammonia storage tank 110 is located opposite the LNG storage tank (cargo tank) 600 and adjacent to the engine room, the cabin area Q may be disposed on the bow side.

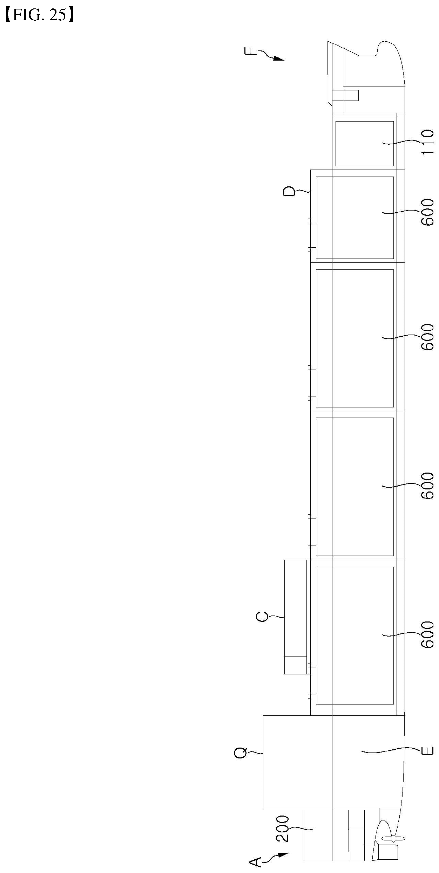

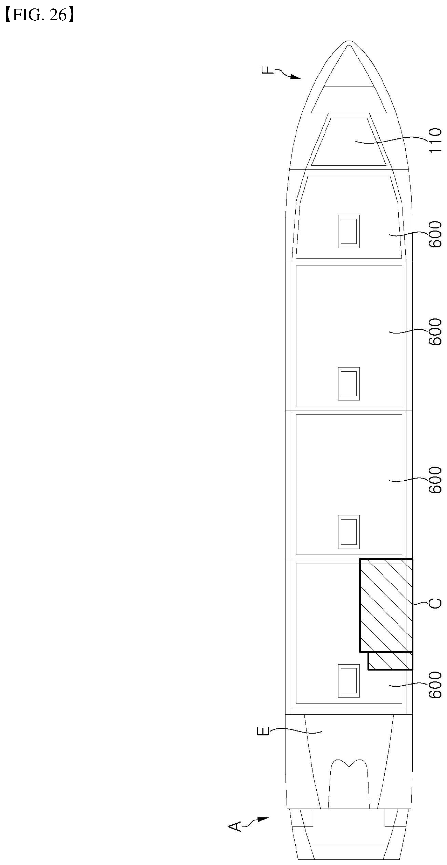

In another embodiment, the ammonia storage tank 110 may be disposed on the aft side F and the cabin area Q may be disposed above the engine room, as shown in FIG. 25 and FIG. 26.

On the other hand, the waste heat recovery unit 200 is disposed in an upper part of the stern area A in a separate room.

The waste heat recovery unit 200 includes a waste heat recovery device 220 that recovers waste heat from exhaust gas of the gas turbine (GT). The waste heat recovery device 220 may be connected to a grinding stone U.

By circulating a heat medium through the waste heat recovery device 220, the ammonia vaporizer 150, and the fuel vaporizer 740, the heat source supply unit 300 may be disposed in the ammonia fuel preparation room P or the engine room R. Alternatively, some components included in the heat source supply unit 300 may be disposed in the ammonia fuel preparation room P and the other components may be disposed in the engine room R. The heat source supply unit 300 has an advantage of interconnecting the waste heat recovery unit 200, the ammonia fuel preparation room P, and the cargo compressor room C, which are distant from one another.

On the other hand, the international regulations require that the pressure in the LNG storage tank 600 be regulated for safety. In this embodiment, LNG boil-off gas is discharged from the LNG storage tank 600 to regulate the pressure in the LNG storage tank 600, and the discharged LNG boil-off gas is treated and supplied as fuel to at least one of the engines according to this embodiment, that is, the gas turbine (GT), the generator engine (GE), and the boiler (BR).

In a conventional method of treating LNG boil-off gas, the LNG boil-off gas is used as fuel and is reliquefied when the fuel demand exceeds the fuel supply, and when both fuel supply and reliquefaction are not possible for some reason, a gas combustion unit (GCU) is generally used to incinerate the boil-off gas to maintain the pressure in the LNG storage tank 600.

However, the gas combustion unit faces challenges due to its bulky design that occupies extensive space, as well as energy waste and carbon dioxide emissions when flaring boil-off gas.

To solve this problem, the ship according to the embodiments of the invention is not provided with the GCU.

In the ship according to the embodiments of the invention, the gas turbine (GT) is used as a substitute for the GCU, thereby reducing costs for GCU installation and the weight of the ship while utilizing the space of the GCU.

The gas turbine (GT) operates in idling mode without generating power from 0% load until the gas turbine reaches the minimum load at which the gas turbine can generate power. Since natural gas is used as fuel in idling mode, the gas turbine (GT) can take over the role of the GCU and can burn all LNG boil-off gas depending on the capacity of the gas turbine (GT) when operating in idling mode.

When a gas turbine (GT) with small capacity is utilized, the role of the conventional GCU can be replaced by the reliquefaction system 800 and an operating combination of the gas turbine (GT), the generator engine (GE), and the boiler (BR) to process all of the LNG boil-off gas.

The gas turbine (GT), the generator engine (GE), and the boiler (BR) according to this embodiment may use LNG boil-off gas as fuel. Furthermore, the gas turbine (GT) and the generator engine (GE) may operate in idling mode to consume the LNG boil-off gas even when there is no power production load, and the boiler may also operate in GCU mode to combust natural gas. Excess steam generated during operation of the boiler in GCU mode may be condensed for disposal.

For example, when the external air temperature is 35°C, the estimated amount of LNG boil-off gas is 1,750 kg/h (100%).

According to the embodiments of the invention, the entire amount of LNG boil-off gas can be treated by incineration by continuously operating the gas turbine (GT) at a minimum load (20%) in idling mode to process about 1,050 kg/h (60%) of the boil-off gas, burning about 200 kg/h (10%) of the boil-off gas as a basic gas consumption required for generating basic power of the generator engine (GE), and burning about 500 kg/h (30%) of the boil-off gas as a gas consumption when operating the boiler (BR) in GCU mode.

If necessary, the capacity of the gas turbine may be designed such that the entire amount of LNG boil-off gas generated in the LNG storage tank can be treated by incineration through combination of operation, such as idling of each piece of equipment and the GCU mode, and the boil-off gas treating ratio of each piece of equipment can be arbitrarily adjusted according to the characteristics of the installed equipment and the ship operation situation.

### <ALS>

The systems according to the embodiments further includes an air lubrication system (ALS) disposed on the ship to reduce frictional resistance during hull movement by injecting air onto an outer bottom surface of the hull. The air lubrication system injects air onto the outer bottom surface of the hull to create a continuous air layer between the hull and the seawater, thereby improving fuel efficiency of the ship through reduction in frictional resistance between the seawater and the hull during movement of the ship.

The air lubrication system (ALS) includes an air compressor for injecting air onto the bottom of the ship, piping for moving the air, an air injection unit, an air layer formed on the bottom surface of the hull, a controller, and the like. In the systems according to the embodiments, bleeding compressed air or some of ammonia exhaust from the gas turbine is supplied to the air lubrication system and utilized as lubrication air, thereby reducing installation and operation costs through elimination of the air compressor and reduction in power for operation of the air compressor. Since the combustion air or exhaust gas of the gas turbine has a pressure of about 30 bar to about 34 bar, which is higher than the air injection pressure of the air lubrication system, air injection may be performed at a reduced pressure corresponding thereto. As a result, there is provided an effect of reducing the air flow rate for operation of the air lubrication system.

With this configuration, the air lubrication system improves fuel efficiency by reducing frictional resistance during ship operation, lowers installation costs, and significantly cuts greenhouse gas emissions by operating with the ammonia-fueled generator engine.

### <Operation of gas turbine according to load from startup>

The gas turbine according to the embodiments of the invention operates without generating power from startup until a certain load is reached, and even if the gas turbine can be fueled by ammonia and natural gas, the fuel supply can be limited depending on a specific load.

In these embodiments, operation of the gas turbine is classified into the following three operation zones based on load.
1. Idling zone - from 0% gas turbine load to the minimum load (BP) at which the gas turbine begins to generate power (0 < gas turbine load (%) ≤ BP).
2. First power generation zone - from the minimum load to certain load (TP) (BP < gas turbine load (%) ≤ TP)
3. Second power generation zone - exceeding certain load (TP < gas turbine load (%))

As described above, conventional main propulsion engines require pilot oil for ignition, whereas the gas turbines applied to the ship according to the embodiments operate without pilot oil. However, the gas turbine does not use ammonia as fuel and is fueled by natural gas only without generating power from startup until a certain load is reached. The idling zone refers to an operating range where the gas turbine is fueled by natural gas and does not generate power. The minimum load for power generation can vary depending on the gas turbine and may, for example, be 50%. During the idling zone, the power to be supplied to the on-board power demand sites, including propulsion power, may be generated by the generator engines.

The first power generation zone refers to an operating range where the gas turbine generates power above the minimum load (BP) using natural gas alone. The gas turbine is fueled by natural gas alone to generate power until the gas turbine reaches the minimum load for fuel switching. The minimum load for fuel switching can also vary depending on the gas turbine. For example, the minimum load may be 60%.

The second power generation zone refers to an operating range above the minimum fuel switching load, where the gas turbine can operate on either ammonia alone or a mixture of ammonia and natural gas. In the second power generation zone, as needed, ammonia and natural gas are mixed in a ratio of 0 to 100%, or ammonia or natural gas is exclusively used to generate on-board power.

Based on the kind of fuel supplied to the gas turbine, the operation mode of the gas turbine is classified into the following two modes.
1. Natural gas operation mode - the gas turbine is fueled by natural gas alone.
2. Fuel-selective operation mode - the gas turbine may be optionally fueled by either ammonia or natural gas.

To put these operation modes into perspective with the load-based operations of the gas turbine, when the gas turbine starts up, the gas turbine is driven without pilot oil and operates in the natural gas operation mode in the idling zone and the first power generation zone, and switches to the fuel-selective operation mode in the second power generation zone.

Since the gas turbine is more efficient at higher loads, the gas turbine load can be increased to operate the gas turbine alone, when the total on-board power demand, including power for propulsion, can be met by operation of the gas turbine alone. Once the gas turbine reaches a minimum load, the generator engine load is reduced while the gas turbine load is gradually increased through the first and second power generation zones, thereby allowing the gas turbine to meet the entire power demand, including power for propulsion.

For example, from startup to 60% of the operation load, the gas turbine may operate in the natural gas operation mode using natural gas alone as fuel, and above 60% of the operation load, the gas turbine may operate in the fuel-selective operation mode using either ammonia or natural gas as fuel, or a mixture thereof, as needed.

As described above, in the idling zone, the gas turbine does not operate. Thus, the generator engine may produce power required for the total on-board power demand sites, including power for propulsion, to be supplied to the on-board power demand sites, and the gas turbine alone may produce power when the entire power demand can be met by the gas turbine alone. Based on such operation of the gas turbine and the generator engine, the gas turbine operation modes are classified into the following three operation modes.
1. Generator exclusive mode - power required for the entire power demand is generated by the generator engine alone.
2. Turbine exclusive mode - power required for the entire power demand is generated by the gas turbine alone.
3. Simultaneous operation mode - power required for the entire power demand is generated by operating the generator engine and the gas turbine at the same time.

The gas turbine is more efficient at high load. Thus, when the on-board power demand can be met by operation of the gas turbine alone, the power may be generated by the gas turbine by increasing the gas turbine load while operating the gas turbine in the turbine exclusive mode. In addition, when the total on-board power demand is low, such as when the ship is at anchor, or when the gas turbine is in idling mode, the generator engine may operate in the generator exclusive mode.

Here, when the generator engine or the gas turbine operates alone, such as in the generator exclusive mode or in the turbine exclusive mode, the generator engine or the gas turbine operates at a limited maximum load by partially limiting the operating load of each piece of equipment to ensure operational stability against a sudden increase in load. For example, in the turbine exclusive mode, the maximum load of the gas turbine alone may be limited to 95%, and in the generator exclusive mode, the maximum load of the generator engine may be limited to 90% to ensure operational stability against a sudden increase in load. In the simultaneous operation mode, since the generator engine and the gas turbine are operated together, the gas turbine may operate at 100% of the maximum load without restriction, and the maximum load of the generator engine may be partially limited to cope with sudden increase in entire power load. For example, in the simultaneous operation mode, the gas turbine may operate up to the maximum load of 100%, while the maximum load of the generator engine may be limited to 90%.

When the total on-board power demand can be met by the gas turbine operation alone within these limited maximum load values, the turbine exclusive mode may be selected to operate the gas turbine more efficiently.

The on-board power management system selects the operation mode according to the total on-board power demand, including power for both propulsion and on-board requirements, and controls the load of the gas turbine and the generator engine.

### <Fuel operation mode of gas turbine>

There are three fuel operation modes for gas turbines that can use ammonia and natural gas as fuel, and the following three modes may be selected in ship operation, as needed.
1. Full ammonia mode - fuel operation mode that prioritizes supply of ammonia as fuel for the gas turbine.
2. Full BOG mode - fuel operation mode that prioritizes supply of LNG boil-off gas from the LNG storage tank as fuel for the gas turbine and allows supply of ammonia for fuel shortage.
3. Full natural gas mode - fuel operation mode in which LNG BOG is supplied first as fuel for the gas turbine and LNG in the LNG storage tank is supplied through forcible vaporization for fuel shortage.

In the full ammonia mode, the gas turbine operates using natural gas in the idling zone from startup to the minimum load for fuel switching and in the first power generation zone, and switches to ammonia to maintain the load by combusting the ammonia in the second power generation zone where the minimum load for fuel switching (e.g., > 60%) is exceeded. This mode can minimize carbon dioxide emissions and environmental impacts of ship operation.

In the full BOG mode, the gas turbine operates using natural gas in the idling zone from startup and in the first power generation zone, and operates preferentially using the LNG boil-off gas (BOG) in the second power generation zone while supplementing ammonia for fuel shortage and maintaining the load using a mixing of natural gas and ammonia. In this mode, the pressure of the LNG storage tank may be regulated through discharge and treatment of boil-off gas from the LNG storage tank while reducing environmental impacts by mixing ammonia and natural gas. By preferentially consuming the spontaneously vaporized natural gas as fuel, it is possible to achieve reduction in power consumption for liquefaction of the boil-off gas and economic operation of the ship.

In the full natural gas mode, the gas turbine operates using natural gas in the idling zone from startup and in the first power generation zone, and operates preferentially using the spontaneously vaporized LNG boil-off gas in the second power generation zone. Here, when the BOG is insufficient, LNG from the LNG storage tank is forcibly vaporized and supplied to the gas turbine to compensate for the fuel shortage. In this mode, the internal pressure of the LNG storage tank can be adjusted through discharge of the boil-off gas, and the spontaneously vaporized natural gas and the forcibly vaporized natural gas with high energy density are used for operation while reducing power consumption for reliquefaction, thereby enabling economical ship operation.

### <Fuel switching of gas turbine>

As described above, even if the gas turbine uses natural gas and ammonia as fuel, ammonia cannot be used as fuel during an initial operation. That is, when natural gas is exclusively used as fuel during the initial operation from startup (idling zone and first power generation zone), and when the operating load of the gas turbine reaches a certain range (second generation zone), ammonia can be used as fuel. Depending on the selected fuel operation mode, the fuel supply for the gas turbine may switch between exclusive ammonia and a variable mixture of natural gas and ammonia (0 to 100%).

For example, for the gas turbine, ammonia may be supplied at a pressure of 30 barg to 40 barg and at a temperature of about 100°C, and natural gas may be supplied at the same pressure of 30 barg to 40 barg as the ammonia and a temperature of about 40°C.

The gas turbine is provided with two separate lines for natural gas and ammonia supply, that is, the gaseous fuel supply line GL and the ammonia supply line FL, each of which is provided with a master supply valve for fuel supply and is also provided with a gas valve unit inside the enclosure.

During the initial operation of the gas turbine (idling zone and first power generation zone) from startup to the minimum load for fuel switching of the gas turbine, natural gas is supplied to the gas turbine through the gaseous fuel supply line GL.

In the idling zone and the first power generation zone of such a gas turbine, the gaseous fuel supply system 700 is continuously operated for fuel supply. Since the fuel required for the gas turbine varies depending on the total on-board power demand, including power for both propulsion and on-board requirements, the natural gas supply to the gas turbine may also be adjusted corresponding thereto.

In the second power generating zone where the fuel supply can be switched, the ammonia supply line is purged to cope with the ammonia fueling when the crew selects a mode that allows ammonia to be used as fuel (full BOG mode or full ammonia mode).

In addition, to supply ammonia fuel, the ammonia supply pump 120 in the ammonia storage tank 110 is activated to deliver ammonia from the ammonia storage tank to the buffer tank 130. The ammonia supply pump is activated according to the liquid level of ammonia in the buffer tank. If the liquid level does not reach a certain level, the ammonia from the ammonia storage tank is delivered to the buffer tank, and when the liquid level is above a certain level, the ammonia supply pump is automatically stopped.

When the liquid level of the buffer tank reaches a certain level, the ammonia boosting pump 140 of the ammonia fuel supply unit is activated to pump and deliver ammonia to the ammonia vaporizer 150. If the temperature downstream of the ammonia vaporizer does not meet the supply temperature required for the gas turbine, the ammonia is circulated back to the buffer tank to prepare ammonia fueling.

When the ammonia fuel supply unit is prepared for ammonia fueling by purging in this way, the master supply valve 160 of the ammonia fuel supply unit 100 is opened, and the flow control valve FVa inside the enclosure is opened to allow the required amount of ammonia gas to be supplied to the gas turbine according to the selected operation mode and the gas turbine load.

The ammonia boosting pump 140 is of a speed-adjustable type and can supply the amount of ammonia required for the gas turbine. If the amount of ammonia required for the gas turbine is less than the minimum flow rate of the pump, the excess flow rate of ammonia pumped by the ammonia boosting pump is circulated to the buffer tank 130 downstream of the ammonia boosting pump.

The ammonia is delivered in a liquid state to the buffer tank, pumped out of the ammonia boosting pump, and vaporized in the ammonia vaporizer 150 to be supplied in a gaseous state to the gas turbine.

In the full ammonia mode, the entirety of the fuel ultimately supplied to the gas turbine is switched to ammonia. When switching of the gas turbine fuel to 100% ammonia gas is complete, the gaseous fuel supply system 700 is stopped and the gaseous fuel master supply valve 750 is closed. The gaseous fuel supply line GL is purged from the downstream of the gaseous fuel master supply valve to the gas turbine by compressed air or inert gas N₂ of the gas turbine, and the purged gas may be combusted in the combustion chamber of the gas turbine and discharged as exhaust gas.

Before stopping the gas turbine operating in the full ammonia mode, or when switching to the natural gas fuel mode, the gaseous fuel master supply valve is reopened and the gaseous fuel supply system operates. Then, natural gas is delivered to the gas turbine based on the turbine load and mixed with a suitable amount of ammonia for operation.

Prohibition on emission of ammonia gas above a certain concentration is regulated. Therefore, when the gas turbine is stopped during operation on ammonia, the fuel supply may be switched to the natural gas fuel mode and the gas turbine may operate for a period of time to purge the ammonia supply line. Then, the purged gas is combusted in the gas turbine and discharged as exhaust gas.

When switching to gas turbine fuel while operating on natural gas, the gaseous fuel supply line may be purged and the purged gas may be combusted in the combustion chamber of the gas turbine and discharged as exhaust. Upon stopping, the purged gas is discharged along the exhaust pipe.

### <Example of operation method according to ship operation>

The following description focuses on some examples of operation methods depending on specific ship operation situations, such as when the ship is at anchor or underway.

### 1. When the ship is at anchor (including loading and unloading)

When the ship is at anchor, the generator engine operates to generate and supply power since the on-board power demand is low. The ship may be provided with a plurality of generator engines. For example, in the ship provided with two generator engines, one generator may operate to meet the on-board power demand when there is no cargo.

When the ship is a liquefied natural gas carrier and is at anchor with cargo, a large amount of LNG boil-off gas is generated and none of the LNG boil-off gas is supplied to the gas turbines as fuel. Thus, as the reliquefaction system is activated to reliquefy the boil-off gas, the power requirement on board increases. Therefore, the plurality of generator engines is designed to have a capacity capable of handling the increased power requirement.

During loading and unloading, electric heaters are activated to provide necessary steam on board, and if large amounts of steam are required, steam may be generated in the boilers. The boilers may be fueled by natural gas.

The generator engines and the dual-fuel boilers may use natural gas and fuel oil.

### 2. During navigation of the ship

During navigation of the ship, the fuel operation mode may be selected from the full ammonia mode, the full BOG mode, and the full natural gas mode.

### 1) When operating in full ammonia mode

- Generator engine operation zone (generator exclusive mode): When the ship is in operation at low speed, for example, up to the minimum load speed at which the gas turbine can generate power (idling zone), the generator engine is used for propulsion and on-board power. The generator engine is fueled by BOG and can operate on low-sulfur marine gas oil if natural gas is not available or is required.
- Gas turbine operation zone (turbine exclusive mode): In the generator engine operation zone, the power requirement for propulsion increases as the ship speed is gradually increased. When power above the minimum load for power generation of the gas turbine is required due to increase in ship speed (first and second generation zones), the load of the generator engine is gradually reduced by the on-board power management system and the ship can operate on the gas turbine alone.

In the first generation zone, the gas turbine is fueled by natural gas, and in the second generation zone where the minimum load for fuel switching is exceeded, natural gas and ammonia are supplied together such that the ammonia mixing ratio is gradually increased to switch the gas turbine fuel from natural gas to ammonia and finally the gas turbine can operate using ammonia gas alone.

The gas turbines are more efficient at higher loads. Thus, when the total on-board power demand, including propulsion, can be met by the gas turbines alone, the gas turbine load can be increased to enable exclusive gas-turbine power generation. During the exclusive operation, the gas turbines are operated at a limited maximum load, for example, around 95% of the maximum load, to protect against sudden load fluctuations.

When the ship is a liquefied natural gas carrier, the operation of the gas turbine in the full ammonia mode and in the turbine exclusive mode means that all boil-off gas from the LNG storage tank can be treated through reliquefaction, since only ammonia is ultimately used as gas turbine fuel and the generator engine does not operate.
- Gas turbine and generator operation zone (simultaneous operation mode): The generator engine operates together with the gas turbine during operation at the limited maximum load, for example, when power above 95% of the gas turbine load is required. In the full ammonia mode, the gas turbine is fueled by ammonia and the generator engine, which is not fueled by ammonia, may be fueled by spontaneously vaporized or forcibly vaporized natural gas.

In the simultaneous operation mode with the generator engine, the gas turbine may operate at 100% load and the maximum load of the generator engine is limited (for example, 90%) to cope with load fluctuations.

### 2) When operating in full BOG mode

- Generator engine operation zone (generator exclusive mode): The ship operates in the same manner as in the full ammonia mode. In the idling zone of the gas turbine, the generator engine uses BOG as fuel to generate power for propulsion and on-board requirements.
- Gas turbine operation zone (turbine exclusive mode): In the generator engine operation zone in which the ship operates at low speed, the power requirement for propulsion increases as the ship speed is gradually increased, and when power above the minimum load for power generation of the gas turbine is required, the power management system gradually reduces the generator engine load while increasing the gas turbine load. Even if the power exceeds the minimum load for fuel switching of the gas turbine, the load can be maintained with a mixture of natural gas and ammonia by prioritizing BOG as fuel while supplementing the fuel shortage with ammonia only when the fuel demand cannot be met with BOG alone.
   As mentioned above, in operation with the gas turbine alone, the maximum load of the gas turbine is limited to cope with load fluctuations.
- Gas turbine and generator engine operation zone (simultaneous operation mode): As in the case where the ship is navigating at high speed, the generator engine operates together with the gas turbine when power above the limited maximum load of the gas turbine is required. The generator engine is fueled by BOG. In the full BOG mode, since the generator engine does not use ammonia as fuel, the gas turbine may operate by preferentially supplying BOG to the generator engine and the remaining BOG to the gas turbine while supplying ammonia to compensate for any fuel shortage in the gas turbine.

As mentioned above, in the simultaneous operation mode, the gas turbine may operate at 100% load and the maximum load of the generator engine is limited to cope with load fluctuations

### 3) When operating in full natural gas mode

- Generator engine operation zone (generator exclusive mode): The ship operates in the same manner as in the full ammonia mode.
- Gas turbine operation zone (turbine exclusive mode): When the ship speed is gradually increased to medium speed in the generator engine operation zone where the ship operates at low speed, power above the minimum load for power production of the gas turbine (for example, 50%) is required, and the power management system can reduce the generator engine load to allow power generation using the gas turbine alone. In full natural gas mode, the BOG is preferentially supplied as fuel for the gas turbine and any fuel shortage is supplemented through forcible vaporization of LNG from the LNG storage tank. In the exclusive mode, the gas turbine operates at a limited maximum load to cope with load fluctuations.
- Gas turbine and generator engine operation (simultaneous operation mode): As in the case where the ship is navigating at high speed, the generator engine operates together with the gas turbine when power above the limited maximum load of the gas turbine is required. In the full natural gas mode, both the gas turbine and the generator engine are fueled by natural gas.

In the simultaneous operation mode, the gas turbine operates at 100% load and the generator engine operates at a limited maximum load to cope with load fluctuations. In addition, BOG is supplied as fuel to the gas turbine and the generator engine, and any fuel shortage is supplemented through forcible vaporization of LNG from the LNG storage tank.

The generator exclusive, turbine exclusive, and simultaneous operation modes may also be referred to as low speed, medium speed, and high speed zones, respectively, based on the ship speed.

Specifically, in the low speed zone where the ship is at anchor or roughly below the minimum load (for example, 50%) at which power generation can be achieved using the gas turbine, the total on-board power demand, including propulsion, can be met by preferentially operating the generator engine. The generator engine is a dual-fuel generator and is supplied with natural gas or low sulfur marine gas oil (LSMGO). Thus, the generator engine may be fueled by either spontaneously vaporized natural gas (BOG) or forcibly vaporized natural gas, or with LSMGO. When the ship speed is gradually increased to increase the power required for propulsion and power above the minimum load (50%) for power production of the gas turbine is required, the gas turbine operates using natural gas from the corresponding ship speed to the minimum load for fuel switching.

In the medium speed zone, the total on-board power demand can be met by the gas turbine. In the first generation zone, the gas turbine operates using natural gas alone as fuel, and in the second generation zone, the ship speed is above the speed at which ammonia can be used as a gas turbine fuel. Thus, the fuel operation mode may be selected from among the full ammonia mode, the full BOG mode, and the full natural gas fuel mode while operating in the turbine exclusive mode. Depending on the selected fuel operation mode, the gas turbine may operate by gradually increasing the ammonia mixing ratio to operate solely on 100% ammonia, prioritizing BOG, supplemented with ammonia to compensate for any fuel shortage, or prioritizing BOG, followed by forcibly vaporized natural gas. In the turbine exclusive mode, the gas turbine operates at a limited maximum load value to cope with sudden load fluctuations.

In the high speed zone, since the total on-board power demand, including propulsion, cannot be met by the gas turbine alone, the gas turbine and the generator engines are operated together (simultaneous operation). By operating the generator engine and the gas turbine together, the gas turbine may operate at 100% load and the maximum load of the generator engine can be limited to cope with load fluctuations. Since the generator engine does not use ammonia as fuel, the generator engine may be supplied with spontaneously vaporized natural gas, forcibly vaporized natural gas, or LSMGO. Depending on the selected fuel operation mode, the gas turbine may operate using: 100% ammonia only; prioritizing BOG remaining after supply to the generator engine, supplemented with ammonia to compensate for any fuel shortage; or prioritizing BOG followed by forcibly vaporized natural gas.

Since the amount of natural gas spontaneously vaporized in the LNG storage tank varies depending on the presence of cargo in the LNG storage tank and the amount of cargo loaded therein, and power for reliquefaction varies accordingly, the ship speed corresponding to the low, medium, and high speed zones can be varied.

In the description of the embodiments, the specific details or the presence of certain components in the drawings do not imply their mandatory inclusion or exclusion in every application, unless explicitly stated otherwise. Furthermore, the components and operational methods described above may be combined or modified in various ways as appropriate.

Although some embodiments have been described, it will be apparent to those skilled in the art that these embodiments are given by way of illustration only, and that various modifications, changes, alterations, and equivalent embodiments can be made without departing from the spirit and scope of the invention. Therefore, it should be understood that these embodiments are provided for illustration only and are not to be construed in any way as limiting the present invention, and that the scope of the invention should be defined by the appended claims and the claims and equivalents thereto.

**<List of Reference Numerals>**

| | | | |
|---|---|---|---|
| 100: | Ammonia fuel supply unit | | |
| 110: | Ammonia storage tank | 120: | Ammonia supply pump |
| 130: | Buffer tank | 140: | Ammonia boosting pump |
| 150: | Ammonia vaporizer | 160: | Ammonia master supply valve |
| 200: | Waste heat recovery unit | | |
| 210: | Preheater | 220: | Waste heat recovery device |
| 230: | Supercritical turbine | 240: | Recuperator |
| 250: | Pre-cooler | 260: | Supercritical compressor |
| 270: | Heat recovery cooler | 280: | Heat source supply valve |
| 290: | Heat source branch valve | | |
| 300: | Heat source supply unit | | |
| 310: | Heat medium tank | 320: | Heat medium circulation pump |
| 330: | Heat medium heater | | |
| 400: | Ammonia condensing unit | | |
| 410: | Ammonia compressor | 420: | Ammonia condenser |
| 430: | Receiver | 440: | Cold heat recovery unit |
| 450: | Gas receiver | 460: | Emergency stop valve |
| 470: | Ammonia detector | 480: | Ammonia discharge valve |
| 490: | Non-return valve | | |
| 500: | Ammonia catching unit | | |
| 510: | Separator | 520: | Absorber |
| 530: | Drain tank | 540: | Ammonia bilge tank |
| 550: | Clean drain tank | 551: | Drain temperature meter |
| 560: | Cooler | 570: | Clean drain pump |
| 700: | Gaseous fuel supply system | 600: | LNG storage tank |
| 710: | Fuel supply pump | 720: | Gaseous fuel compressor |
| 730: | Fuel boosting pump | 740: | Fuel vaporizer |
| 750: | Gaseous fuel master supply valve | 760: | Vaporization heat source |
| | | | valve |
| 800: | Reliquefaction system | | |
| 810: | Boil-off gas compressor | 820: | Refrigerant circulator |
| 830: | Reliquefier | | |
| GT: | Gas turbine | | |
| CF: | Combustion air inlet filter | VF: | Air filter |
| CI: | Combustion air inlet duct | VI: | Ventilation air inlet duct |
| CO: | Combustion gas outlet duct | VO: | Ventilation air outlet duct |
| T: | Turbine | G: | Generator |
| FN: | Ventilation fan | | |
| GE: | Generator engine | | |
| BR: | Boiler | VM1, VM2: | Vent mast |
| FL: | Ammonia supply line | BL: | Ammonia boil-off gas line |
| RL: | Ammonia reliquefaction line | GL: | Gaseous fuel supply line |
| LL: | Forcible vaporization line | TL: | Liquefaction return line |
| CL: | Tank cooling line | DL: | Ammonia discharge line |
| EL: | Exhaust gas line | HL: | Heat medium circulation line |
| HL1: | Steam heating line | HL2: | Steam bypass line |
| HL3: | Heat source supply line | HL4: | Vaporization heat source line |
| HL5: | Heat medium vaporization line | PL: | Purge gas condensing line |
| SL: | Supercritical line | SL1: | Supercritical branch line |
| A: | Stern area | F: | Bow area |
| E: | Engine room | U: | Grinding stone |
| P: | Ammonia fuel preparation room | C: | Cargo compressor room |
| D: | Outer deck | Q: | Cabin area |
| QC: | Air conditioning unit | | |

## Claims

1. An ammonia gas turbine fuel supply system comprising:
a gas turbine generating power using gaseous ammonia as fuel;
an ammonia fuel supply unit for supplying gaseous ammonia fuel to the gas turbine; and
an ammonia catching unit for treating ammonia in a purge gas generated while purging at least one of the gas turbine and the ammonia fuel supply unit,
wherein the gaseous ammonia supplied to the gas turbine from the ammonia fuel supply unit is entirely consumed by the gas turbine without being returned to the ammonia fuel supply unit.

2. The ammonia gas turbine fuel supply system according to claim 1, wherein the ammonia fuel supply unit comprises:
an ammonia storage tank storing ammonia in a liquid phase;
an ammonia boosting pump pressurizing the liquid-phase ammonia to a pressure required for the gas turbine; and
an ammonia vaporizer vaporizing the ammonia pressurized by the ammonia boosting pump to generate gaseous ammonia,
wherein a temperature of the gaseous ammonia produced in the ammonia vaporizer is higher than a dew point thereof.

3. The ammonia gas turbine fuel supply system according to claim 2, further comprising:
a waste heat recovery unit for recovering waste heat of exhaust gas from the gas turbine to generate supercritical carbon dioxide and expanding the supercritical carbon dioxide to generate power,
wherein the ammonia vaporizer vaporizes the liquid-phase ammonia with thermal energy of the supercritical carbon dioxide received from the waste heat recovery unit.

4. The ammonia gas turbine fuel supply system according to claim 2, further comprising:
a heat source supply unit for supplying hot water generated through heat exchange between steam and water to the ammonia vaporizer as a heat source for vaporizing the liquid-phase ammonia.

5. The ammonia gas turbine fuel supply system according to claim 1, further comprising:
an ammonia condensing unit for condensing ammonia boil-off gas generated in the ammonia fuel supply unit to generate reliquefied ammonia boil-off gas.

6. An ammonia gas turbine fuel supply method, comprising:
generating gaseous ammonia by vaporizing and heating ammonia stored in a liquid phase;
generating power by combusting the gaseous ammonia to drive a gas turbine, and using the generated power for propulsion; and
absorbing ammonia in a purge gas to reduce a concentration of ammonia in the purge gas before the purge gas is vented to the atmosphere, the purge gas being generated while purging the gas turbine and at least one of piping and devices used to generate the gaseous ammonia,
wherein the gaseous ammonia supplied to the gas turbine is entirely combusted in the gas turbine without being returned and discharged from the gas turbine.

7. The ammonia gas turbine fuel supply method according to claim 6, wherein the step of generating gaseous ammonia comprises:
pressurizing the liquid-phase ammonia to a pressure required for the gas turbine; and
vaporizing the pressurized liquid-phase ammonia to a temperature higher than a dew point of the ammonia.

8. The ammonia gas turbine fuel supply method according to claim 6, further comprising:
compressing boil-off gas generated by spontaneous vaporization of liquefied gas fuels other than ammonia to a pressure required for the gas turbine; and
supplying the compressed boil-off gas as fuel to the gas turbine.
